# EUROPEAN PATENT APPLICATION

(11) **EP 4 815 173 A1**
(43) Date of publication of application: **30.09.2026**
(21) Application number: 26167581.3
(22) Date of filing: 25.03.2026
(51) Int. Cl.: H01M 50/528, H01M 50/531, H01M 50/533, H01M 50/536, H01M 50/103, H01M 50/15, H01M 50/176, H01M 50/553

(54) **SECONDARY BATTERY**

(30) Priority: 25.03.2025 KR 20250038280; 22.07.2025 KR 20250099304; 19.02.2026 KR 20260030799; 24.03.2026 KR 20260052740
(71) Applicant: LG Energy Solution, Ltd., Seoul 07335 (KR)
(72) Inventor: LEE, Hak Soo, Daejeon 34122 (KR); LEE, Won Jae, Daejeon 34122 (KR); LEE, Hee Moon, Daejeon 34122 (KR); KIM, Wan Seop, Daejeon 34122 (KR); KIM, Jeong Jin, Daejeon 34122 (KR); PARK, Hyeon Uk, Daejeon 34122 (KR); LIM, Young Gon, Daejeon 34122 (KR); HONG, Ji Su, Daejeon 34122 (KR)
(74) Representative: Goddar, Heinz J.

(57) **Abstract**

Disclosed herein is a secondary battery capable of stably connecting thin-film tabs to a current collector as the number of electrode assemblies increases. The secondary battery includes a casing, a plurality of electrode assemblies, electrode tab bundles formed on the electrodes of the plurality of electrode assemblies, respectively, a current collector coupled to the electrode tab bundles of the plurality of electrode assemblies, and a cap. The current collector includes a connecting portion on which a connection terminal connected to the external terminal is positioned, and a plurality of branches extending from the connecting portion , the electrode tab bundles being coupled thereto.

## Description

### CROSS-REFERENCE TO RELATED APPLICATION

The present application claims priority to and the benefit of Korean Patent Application Nos. 10-2025-0038280, 10-2025-0099304, 10-2026-0030799, and 10-2026-0052740, respectively filed on March 25, 2025, July 22, 2025, February 19, 2026, and March 24, 2026, in the Korean Intellectual Property Office, the entire disclosure of which is incorporated herein by reference.

### BACKGROUND

### 1. Technical Field

The present disclosure relates to a secondary battery capable of being charged and discharged.

### 2. Related Art

Recently, as demand for portable electronic products such as laptops, video cameras, and mobile phones has rapidly increased and the development of electric vehicles, energy storage batteries, robots, satellites, and the like has become more active, research has been actively conducted on high-performance secondary batteries capable of repeated charging and discharging.

Currently commercialized secondary batteries include nickel-cadmium batteries, nickel-metal hydride batteries, nickel-zinc batteries, and lithium secondary batteries. Among these, the lithium secondary batteries are drawing attention because they exhibit little or no memory effect compared to nickel-based secondary batteries, allow free charging and discharging, have a very low self-discharge rate, and provide high energy density.

Such lithium secondary batteries mainly use a lithium-based oxide and a carbon material as a positive electrode active material and a negative electrode active material, respectively. In addition, the lithium secondary battery may include a positive electrode plate and a negative electrode plate on which the positive electrode active material and the negative electrode active material are respectively coated, an electrode assembly in which the positive electrode plate and the negative electrode plate are disposed with a separator interposed therebetween, and an outer casing configured to hermetically accommodate the electrode assembly together with an electrolyte.

The lithium secondary battery may be classified, according to the shape of a battery casing, into a can-type secondary battery in which an electrode assembly is embedded in an (e.g., rigid) casing such as a metal can, and a pouch-type secondary battery in which an electrode assembly is embedded in a pouch formed of, e.g., an aluminum laminate sheet. The can-type secondary battery may also be classified into a cylindrical battery and a prismatic battery according to the shape of the casing.

### SUMMARY

In secondary batteries, for example in the case of the prismatic battery, a plurality of tabs (e.g., thin-film tabs) connected to an electrode plate may be gathered together and welded to a current collector. As the thickness of the electrode assembly increases, the length of the tabs required for welding may increase, and there may be a need to stably couple such tabs to the current collector.

Accordingly, an object of the present disclosure may for example be to provide a secondary battery that can increase energy density per unit volume by reducing a space occupied by a thin-film tab or the like within a casing.

Another object of the present disclosure may for example be to provide a secondary battery that can reduce resistance to current (e.g., caused by an increase in a length of a thin film tab) in a process in which current is delivered to or drawn from an electrode assembly through an external terminal.

A further object of the present disclosure may for example be to provide a secondary battery that can stably connect a tab such as a thin-film tab to a current collector as the number of electrode assemblies increases.

A secondary battery according to an embodiment of the present disclosure may include a casing; a plurality of electrode assemblies accommodated in the casing, each electrode assembly including an electrode; electrode tab bundles formed on the electrodes of the plurality of electrode assemblies, respectively (e.g., with each electrode assembly including an electrode tab formed on the electrode of the respective electrode assembly), for example at a first side of the plurality of electrode assemblies; a current collector coupled to the electrode tab bundles of the plurality of electrode assemblies; and a cap (e.g., a cap assembly) sealing the casing and having an external terminal connected to the current collector. The current collector may include a connecting portion (e.g., a main support plate) on which a connection terminal connected to the external terminal is positioned, and a plurality of branches extending from (e.g., a side surface of) the connecting portion (e.g., the main support plate), for example along (e.g., on) the first side of the plurality of the electrode assemblies and/or along a width direction of the electrode assemblies. The electrode tab bundles may be coupled to the plurality of branches of the current collector.

The secondary battery may be a can-type secondary battery (e.g., having a rigid casing). The secondary battery may in particular be a prismatic secondary battery (i.e., have, at least substantially, the shape of a prism), in particular a quadrilateral (quadrangular) prismatic (e.g., parallelepiped) shape such as a rectangular prismatic shape (i.e., have, at least substantially, the shape of a rectangular cuboid).

The casing is not particularly limited and may be embodied in various ways, e.g., as known in the art. The casing may, together with the cap, form a housing of the secondary battery, which may for example accommodate the plurality of electrode assemblies, the current collector and, optionally, further components of the secondary battery (e.g., an electrolyte) and seal off the same from the surroundings of the secondary battery.

The casing (which may also be referred to as case herein) and/or the housing may be made of (e.g., comprise or consist of) a rigid material, in particular a metal material. The casing and/or the housing may have a prismatic shape (i.e., have, at least substantially, the shape of a prism), in particular a quadrilateral (quadrangular) prismatic (e.g., parallelepiped) shape such as a rectangular prismatic shape (i.e., have, at least substantially, the shape of a rectangular cuboid).

The casing may have an opening, e.g., for inserting the plurality of electrode assemblies into the casing. The cap may cover the opening to seal (e.g., close) the casing. The opening may be formed at at least one side (e.g., surface) of the casing and, in some examples, may extend over said entire side of the casing.

As used herein, directions, orientations and similar geometric terms may be defined relative to the casing of the secondary battery, in particular relative to the side of the casing at which the cap is arranged (e.g., the side of the casing having the aforementioned opening).

The side or surface of the casing (or of the secondary battery) at which the cap is arranged may be referred to as the top (or upper) side or surface of the casing (and of the secondary battery, respectively) herein. A side or surface of the casing opposite to the side or surface at which the cap is arranged may accordingly be referred to as a lower or bottom side and surface, respectively. Similarly, a side or surface of an element, structure or the like facing in the same (or substantially the same) direction as the upper side or surface of the casing or of the secondary battery may be referred to as an upper (or top) side and surface, respectively, of the respective element/structure and a side or surface of an element, structure or the like facing in the same (or substantially the same) direction as the bottom side or surface of the casing or of the secondary battery may be referred to as a bottom (or lower) side and surface, respectively, of the respective element/structure. A direction from the lower side or surface of the casing or of the secondary battery to the upper side or surface of the casing and of the secondary battery, respectively, may be referred to as a vertical direction or vertically and a direction perpendicular to the vertical direction (e.g., parallel to the upper side or surface) may be referred to as a horizontal direction or horizontally. It is, however, to be noted that these terms are used for ease of reference only and are not intended to imply any particular orientation or direction with respect to the direction of gravity or with respect to other entities (such as a device that the secondary battery is used in) as this may depend on the orientation of the secondary battery (and/or of the device) in space, which may vary depending on use and state of the battery. Put differently, depending on the orientation of the secondary battery in space, the top side or surface of the casing or secondary battery must not necessarily be the uppermost side or surface of the casing and secondary battery, respectively, with respect to the direction of gravity but in some examples may, e.g., also face sideways or downwards with respect to the direction of gravity.

Additionally or alternatively, a side or surface of an element, structure or the like facing towards an inside (e.g., a center) of the casing of the battery may for example be referred to as an inner side and surface, respectively, of the respective element/structure and a side or surface of an element, structure or the like facing towards an outside (e.g., away from a center) of the casing of the battery may be referred to as an outer side and surface, respectively, of the respective element. A direction towards an inside of the casing of the battery may be referred to as an inward direction or inwards and a direction towards an outside of the casing of the battery may be referred to as an outward direction or outwards.

The electrode assemblies are not particularly limited and may be embodied in various ways, e.g., as is known in the art. Each of the electrode assemblies may for example be a stacked or wound electrode assembly, e.g., be formed by stacking and winding, respectively, one or more electrode members (e.g., electrode sheets or plates), for example with a separator interposed therebetween. The plurality of electrode assemblies as a whole (i.e., all of the electrode assemblies collectively/the joint structure, e.g., stack of electrode assemblies, formed by the electrode assemblies in conjunction) may also be referred to as the electrode assembly arrangement herein.

Each of the electrode assemblies may comprise a positive electrode and a negative electrode (i.e., two electrodes of opposite polarities), wherein the electrode referred to herein (which may also be referred to as the first electrode) may either be the positive electrode or the negative electrode of the respective electrode assembly (wherein the other/second electrode as well as the corresponding parts of the respective electrode assembly (e.g., second electrode tab bundle) and of the secondary battery (e.g., second current collector) are preferably embodied in the same way as described herein in relation to the first electrode, although this need not necessarily be the case).

The (first) electrode of each of the electrode assemblies may comprise one or more electrode members (e.g., electrode sheets or plates), which, as described above, may for example be stacked or wound to form the electrode.

Each electrode tab bundle may comprise a plurality of electrode tabs, e.g., one electrode tab for each electrode member of the electrode or one electrode tab for each winding of the electrode (e.g., each winding of a same electrode member thereof). Some or all of the electrode tabs may be integrally formed with the electrode (e.g., with the electrode member(s) and in particular with a respective one of the electrode member(s)), e.g., by an uncoated portion thereof.

Each electrode assembly is associated with a respective electrode tab bundle (formed on the electrode of the respective electrode assembly). The electrode tabs in the respective bundle may be bundled together (e.g., attached to each other, for example by (e.g., first and/or second) welding), but may not be bundled with (e.g., not be attached to) electrode tabs of other bundles/other electrode assemblies (thus rendering the electrode assemblies structurally distinct from each other).

In some examples, some or all of the electrode assemblies may comprise an envelope structure (e.g., one or more tapes, a cover, a cladding, a sheath, a pouch or the like) wrapping (e.g., partially or completely surrounding or enclosing) the respective electrode assembly (and thus delimiting the electrode assembly against adjacent electrode assemblies). Additionally or alternatively, some or all of the electrode assemblies may form part of a continuous electrode stack (e.g., may only by rendered structurally distinct from each other by bundling of the electrode tabs into the respective bundles).

The electrode assemblies may be stacked (e.g., in a stacking direction), for example so as to form a stack of electrode assemblies (e.g., along the stacking direction). The stacking direction of the electrode assembly may for example coincide with one or more of a thickness direction of the electrode assemblies (as defined below), a stacking direction of electrode members within the electrode assemblies and a horizontal direction.

The electrode tab bundles of the electrode assemblies are formed at (e.g., on) a first side (e.g., first surface) of the plurality of electrode assemblies (i.e., at a first side of the electrode assembly arrangement). The first side of the electrode assembly arrangement may in particular be a top/upper side of the electrode assembly arrangement (i.e., the side of the electrode assembly arrangement facing the cap). The first side of the electrode assembly arrangement may be (at least substantially) flat and may, for example, extend perpendicular or substantially perpendicular to the vertical direction (e.g., parallel to the width and thickness directions). The first side of the electrode assembly arrangement may refer to the respective side or surface of the electrode assembly arrangement without the electrode tab bundles (wherein said side or surface may, e.g., be formed by an electrode arrangement such as an electrode stack or electrode roll comprising the electrode, without the electrode tab bundle).

As used herein, two directions, elements or the like being substantially perpendicular (or similar expressions such as substantially orthogonal or being/extending in a substantially perpendicular direction) may for example refer to the directions and elements, respectively, being (e.g., extending or projecting) at an angle of between 70° and 110°, in some examples between 80° and 100°, in one example between 85° and 95° and in one example between 88° and 92° to each other. Similarly, two directions, elements or the like being substantially parallel (or similar expressions such as being/extending in substantially the same direction) may for example refer to the directions and elements, respectively, being (e.g., extending or projecting) at an (acute) angle of between -20° and 20°, in some examples between -10° and 10°, in one example between -5° and 5° and in one example between -2° and 2° to each other.

In relation to the electrode assemblies, a direction from a second side (e.g., a bottom/lower side) of the respective electrode assembly or of the electrode assembly arrangement opposite to the first side (where the electrode tab bundles are formed) may be referred to as a height (or longitudinal or length) direction (of the respective electrode assemblies and of the electrode assembly arrangement, respectively), which may coincide with the vertical direction of the battery casing. A direction of smallest extent (e.g., along a minor axis) of a given electrode assembly (which may coincide for all electrode assemblies), e.g., in a plane perpendicular to the height direction, may be referred to as a thickness direction of the respective electrode assembly, which in some examples may coincide with a stacking direction of electrode members within the respective electrode assembly. A width direction of a given electrode assembly may in turn refer to a direction perpendicular to the height and thickness directions of the respective electrode assembly; a direction along a major axis or axis/(non-diagonal) direction of largest extent (e.g., largest physical dimension) of the respective electrode assembly in a plane perpendicular to the height direction; and/or a direction perpendicular to the height direction of the respective electrode assembly and the stacking direction of electrode members within the respective electrode assembly (all of which will coincide in most cases). In some examples, the width direction may correspond to the major axis or axis/(non-diagonal) direction of (overall) largest extent (e.g., largest physical dimension) of the respective electrode assembly (i.e., the electrode assemblies may be wider than high).

The first side of the plurality of electrode assemblies (the electrode assembly arrangement) may be parallel or substantially parallel to the width and thickness directions.

The electrode assemblies may all be arranged in the same orientation, e.g., such that their height, width and thickness directions coincide.

The cap seals (e.g., covers and/or closes, preferably hermetically) the casing (e.g., the opening thereof for inserting the plurality of electrode assemblies). The cap comprises the external terminal, for example on and/or in an outer surface thereof (i.e., on the outside of the secondary battery). The external terminal may serve to connect to (e.g., charge and discharge) the secondary battery from the outside. For this, the external terminal is (electrically) connected (e.g., in contact with and, in some examples, welded or otherwise bonded in an electrically conductive fashion) to the current collector (namely the connection terminal thereof), preferably directly (i.e., without any intermediate elements arranged therebetween). The cap may be embodied as a cap assembly, which may, for example, comprise a capping structure such as a cap plate and the external terminal provided on and/or in the capping structure. The cap may be made of (e.g., comprise or consist of) a rigid material (in particular a metal material), which may or may not be the same material as the material that the housing is made of.

The current collector may be configured to collect and pass current (e.g., provide a conductive path) from the electrode tab bundles of the electrode assemblies to the external terminal at the cap. For this, the current collector, in particular its branches, is coupled (e.g., welded, or otherwise bonded or attached in an electrically conductive fashion) to the electrode tab bundles of the electrode assemblies (and, via its connection terminal, connected to the external terminal). Preferably, the electrode tab bundles are coupled to upper surfaces of the branches (i.e., surfaces facing away from the electrode assemblies), e.g., such that the branches of the current collectors are interposed between the electrode tab bundles and the electrode assemblies (e.g., the electrodes thereof), for example to protect the electrode assemblies during welding of the electrode tab bundles to the current collector.

The current collector comprises a connecting portion and a plurality of branches extending from the connecting portion. Collectively, the connecting portion and the branches may be referred to as a current collecting portion (e.g., current collecting member) of the current collector. The current collecting portion may be embodied as a current collecting plate, i.e., the connecting portion and the branches may form part (e.g., portions) of the same plate. Preferably, the current collecting portion (e.g., the current collecting plate) is flat, e.g., comprises a (single) planar upper surface, and optionally a (single) planar bottom surface, without any steps, protrusions or depressions formed therein (other than the connection terminal). In some examples, the current collecting portion may be integrally formed as a single piece.

The connecting portion connects (e.g., electrically and mechanically) the branches to each other (e.g., extends between the branches) and to the connection terminal. The connecting portion may be embodied as a plate and may thus also be referred to as the main support plate or connecting plate herein.

The connection terminal is arranged on the connecting portion, e.g., on an upper surface thereof. The connection terminal may protrude from the connecting portion (e.g., the upper surface thereof). The connection terminal may protrude from the connecting portion towards the external terminal, for example through the cap and, in some examples, into or through the external terminal (e.g., a hole or opening therein). The connection terminal may, for example, be embodied as a pin (e.g., rod, bolt, stud, column or the like), in particular a cylindrical pin. The connection terminal may be integrally formed with the connecting portion, and optionally also with some or all of the branches, as a single piece. In one example, the entire current collector may be integrally formed as a single piece.

The plurality of branches extend (e.g., project, for example jut, stick out or protrude) from the connecting portion. The branches may be spaced apart from each other (e.g., may not be in contact with each other or otherwise connected other than via the connection portion), e.g., in a direction intersecting with (and in particular perpendicular to) the extension direction along which the branches extend. The branches may form fingers, strips or projections extending from the connecting portion.

The branches may for example extend from a side surface of the connecting portion. The side surface of the connecting portion may for example extend between upper and lower surfaces of the connecting portion. The side surface may be an edge surface (e.g., form an edge) of the connecting portion.

The branches may extend from the connecting portion (e.g., the side surface thereof) along (e.g., parallel or substantially parallel to) the first side (e.g., upper side) of the electrode assembly arrangement, for example (at least substantially) horizontally. In most cases, the branches will not extend along the entire first side of the electrode assembly arrangement but only along a part thereof, for example over between 10% and 60%, in some examples over between 20% and 40% of an extent (e.g., length) of the electrode assembly arrangement in the extension direction of the branches. The branches may extend on (e.g., in contact with) the first side of the electrode assembly arrangement.

The branches may extend along a (same) extension direction (also referred to as projection direction), for example parallel or substantially parallel to each other. The extension direction is along the first side of the electrode assembly arrangement and may, for example, be parallel or substantially to the first side of the electrode assembly arrangement. In some examples, the extension direction of the branches may coincide with (e.g., be parallel or substantially parallel to) a width direction of the electrode assemblies, i.e., the branches may extend along the width direction of the electrode assemblies (e.g., perpendicular or substantially perpendicular to a thickness direction of the electrode assembly).

The electrode tab bundles of the electrode assemblies are coupled (e.g., welded, or otherwise bonded or attached in an electrically conductive fashion) to (e.g., on) the plurality of branches, in particular to upper surfaces thereof. Each of the electrode tab bundles may for example be coupled to one of the plurality of branches (but may not be coupled to any of the other branches, i.e., may be coupled to only one/a single one of the plurality of branches). Each branch may be coupled to one or more electrode tab bundles (e.g., to a respective pair of electrode tab bundles). In some examples, all branches may be coupled to the same number of electrode tab bundles (e.g., to a respective (single) electrode tab bundle or to a respective pair of electrode tab bundles). In other examples, the branches may be coupled to different numbers of electrode tab bundles (e.g., some branches to a respective (single) electrode tab bundle and other branches to a respective pair of electrode tab bundles).

In some examples, one, more or all of the branches may be coupled to a respective pair of electrode tab bundles. The pair of electrode tab bundles may be bent onto the respective branch (e.g., an upper surface thereof) in opposite directions to face each other, e.g., as detailed below for the first branch.

For some or preferably all of the electrode tab bundles, electrode tabs within (i.e., of) the respective electrode tab bundle may be coupled (e.g., fixedly coupled or fixed) to each other by a first weld (of the respective electrode tab bundle), e.g., a first welding connection or joint. The first weld may also be referred to as first welding or pre-welding/pre-weld and may for example have been formed prior to coupling the respective electrode tab bundle to the current collector, e.g., prior to forming the second weld described below. The electrode tabs within the respective electrode tab bundle may, for example, be coupled to each other in a first welding region (e.g., a respective first welding region for each of the electrode tab bundles) formed by the first weld of the respective electrode tab bundle (i.e., the first weld may extend over or cover the first welding region). For example, ends (e.g., end portions at a distal/far side as seen from the electrode of the respective electrode assembly) of the electrode tabs within the respective electrode assembly may be coupled to each other by the first weld. Put differently, ends of the electrode tab bundles may be (i.e., may have been/may be in a state) fixedly coupled to each other by first welding (e.g., the first weld).

Additionally or alternatively, the electrode tab bundles (e.g., the ends thereof) may be coupled (e.g., fixedly coupled or fixed) to (e.g., on) the plurality of branches by a (respective) second weld (e.g., a second welding connection or joint), which may also be referred to as second welding and is different from the first weld/welding (e.g., has been formed thereafter). The electrode tab bundles may, for example, be coupled to the plurality of branches in a respective second welding region formed by the (respective) second weld (i.e., the second weld may extend over or cover the second welding region). Put differently, the ends of the electrode tab bundles may be (i.e., may have been/may be in a state) fixed on the plurality of branches by second welding (e.g., the second weld).

The electrode tabs of the electrode assemblies may for example have been coupled to the current collector in two steps: First, the electrode tabs within a given electrode tab bundle may have been be coupled to each other by a first welding process forming the respective first weld/first welding. Then, the respective electrode tab bundle may be coupled to the plurality of branches (e.g., to the respective branch) by a second welding process forming the respective second weld/second welding. For example, the electrode tabs of a given electrode assembly may be gathered together and pre-welded (to each other) and then welded again to the current collector.

The first weld and the second weld may be structurally distinct from each other, for example as a result of their formation process (e.g., by the aforementioned two steps) and/or as a result of them being formed between different structures (namely between the electrode tabs of the respective electrode tab bundle and between the respective electrode bundle and the plurality of branches of the current collector, respectively). The first and second weld may, for example, differ in their material composition, their metallurgical properties (e.g., their microstructure, grain size, morphology, phase composition and/or presence or absence of defects) and/or their mechanical properties.

For some or all of the electrode tab bundles (e.g., for some or all of the electrode tab bundles comprising a first weld), the second weld (for example the second welding region formed by the second welding, e.g., at the ends of the electrode tabs/at the end of the electrode tab bundle) may at least partially overlap (e.g., at least partially coincide with, cover or be covered by) the first weld (for example the first welding region formed by the first weld, e.g., at the ends of the electrode tabs/at the end of the electrode tab bundle), for example as seen perpendicular to the first side of the electrode assembly arrangement (e.g., seen along the vertical or height direction). In particular, the second weld may at least partially be merged (e.g., fused, welded or molten together) with the first weld. For example, at least 50%, in some examples at least 75% and in some examples at least 90% of an area (e.g., a cross-sectional area) of the second weld (e.g., of the second welding region) may overlap (e.g., be merged with) the first welt (e.g., the first welding region), for example as seen perpendicular to the first side of the electrode assembly arrangement (e.g., along the vertical or height direction).

For example, a second welding region formed at the ends by the second welding (e.g., the second weld) may at least partially overlap a first welding region formed at the ends by the first welding (e.g., the first weld).

In some examples, the second weld may be located (e.g., arranged or formed) within the first weld (e.g., the first welding region), for example as seen perpendicular to the first side of the electrode assembly arrangement (e.g., seen along the vertical or height direction and/or in a plane parallel to the first side). For example, the second welding region (formed by the second weld/welding) may be located within the first welding region (formed by the first weld/ welding). For example, the first weld (e.g., the first welding region and in particular an outer boundary thereof) may encompass (e.g., surround or enclose) the second weld (e.g., the second welding region and in particular an outer boundary thereof), for example as seen perpendicular to the first side of the electrode assembly arrangement.

In some examples, for some or all of the electrode tab bundles (e.g., for some or all of the electrode tab bundles comprising a first weld), an area (e.g., a cross-sectional area) of the first weld (e.g., of the first welding region) may be between 1.1 to 5 times, in some examples between 1.5 and 3.5 times an area (e.g., a cross-sectional area) of the second weld (e.g., of the second welding region), for example in a plane parallel to the first side of the electrode assembly arrangement. For example, an area of the first welding region formed at the ends (of the electrode tab bundles) by the first welding may be 1.1 to 5 times an area of the second welding region formed at the ends (of the electrode tab bundles) by the second welding.

In some examples, for some or all of the electrode tab bundles (e.g., for some or all of the electrode tab bundles comprising a first weld), a length of the first weld (e.g., of the first welding region) may be greater (e.g., at least 5% greater, in some examples at least 10% greater and in some examples at least 20% greater) than a length of the second weld (e.g., of the second welding region), e.g., be between 1.1 times and 2.0 times, in some examples between 1.2 times and 1.5 times the length of the second weld or welding region. The lengths of the first and second welds (or welding regions) may for example be measured in the extension direction along which the plurality of branches extend from the connecting portion and/or along the width direction of the electrode assemblies. For example, a length of the first welding region in the width direction may be greater than a length of the second welding region.

The electrode tab bundles (e.g., the ends, the centers and/or the edges thereof) may be arranged in a line along a direction intersecting (e.g., perpendicular or substantially perpendicular to) the extension direction along which the plurality of branches extend from the connecting portion (said direction intersecting the extension direction also being along, e.g., parallel or substantially parallel to, the first side of the electrode assembly arrangement), for example along the thickness direction.

The plurality of electrode assemblies may include (and in some examples consist of) three electrode assemblies. In other examples, the plurality of electrode assemblies may include (and in some examples consist of) four electrode assemblies, five electrode assemblies, six electrode assemblies or more electrode assemblies. In one example the plurality of electrode assemblies may include or consist of two electrode assemblies only.

The electrode assemblies may be arranged (e.g., stacked) in parallel (e.g., parallel to each other), for example along (e.g., distributed along) the thickness direction and/or a direction perpendicular or substantially perpendicular to the extension direction. At least one electrode tab bundle (e.g., of a given polarity) that is coupled to the current collector (e.g., to the plurality of branches) may be disposed on each of the electrode assemblies.

The plurality of branches may for example include (and in some examples consist of) a first branch and a second branch (each extending from the connecting portion along the first side of the electrode assembly arrangement, for example in the (common) extension direction, which may or may not coincide with the width direction of the electrode assemblies). The first and second branches may, for example, extend parallel to each other.

The first and second branches may be spaced apart from each other, e.g., in a direction intersecting (e.g., perpendicular or substantially perpendicular to) the extension direction along which the plurality of branches extend from the connecting portion (with said direction intersecting the extension direction also being along, e.g., parallel or substantially parallel to, the first side of the electrode assembly arrangement and for example corresponding to a direction along a shortest separation/distance between the first and second branches).

For example, the plurality of branches may include a first branch and a second branch that are spaced apart from each other in a thickness direction of the electrode assembly intersecting the width direction.

In some examples, different numbers of the electrode tab bundles may be coupled (e.g., welded) to (e.g., onto) the first branch and the second branch.

For example, two electrode tab bundles may be coupled (e.g., welded) to (e.g., onto) the first branch, and one electrode tab bundles may be coupled (e.g., welded) to (e.g., onto) the second branch, or vice-versa (i.e., two electrode bundles to the second branch and one electrode bundle to the first branch).

The two electrode tab bundles and the one electrode tab bundle (e.g., the ends, the centers and/or the edges thereof) may be arranged in a line along a direction intersecting (e.g., perpendicular or substantially perpendicular to) the extension direction along which the plurality of branches extend from the connecting portion (said direction intersecting the extension direction also being along, e.g., parallel or substantially parallel to, the first side of the electrode assembly arrangement), for example along the thickness direction.

In some examples, the two electrode tab bundles may be bent onto the first branch (e.g., onto an upper surface of the first branch) in opposite directions (e.g., opposite directions perpendicular or substantially perpendicular to the extension direction, for example (at least substantially) parallel to and (at least substantially) antiparallel to the thickness direction) to face each other (for example, such that ends of the two electrode tab bundles face each other, e.g., in a direction perpendicular or substantially perpendicular to the extension direction, for example along the thickness direction). For example, the two electrode tab bundles may be arranged at (e.g., bent around) opposite sides (e.g., edges) of the first branch (wherein said sides or edges may extend along the extension direction). The two electrode tab bundles may or (preferably) may not overlap on the first branch. The two electrode tab bundles may be coupled onto the first branch, e.g., onto the upper surface thereof.

The one electrode tab bundle may be bent onto the second branch (e.g., onto an upper surface of the second branch), e.g., in a direction perpendicular or substantially perpendicular to the extension direction. The one electrode tab bundle may in particular be bent in the same direction as an adjacent one of the two electrode tab bundles (e.g., as the one of the two electrode tab bundles arranged between the first and second branches). The second branch may be arranged between the one electrode tab bundle and the adjacent one of the two electrode tab bundles. The one-electrode tab bundle may be coupled onto the second branch, e.g., onto the upper surface thereof.

For example, the two electrode tab bundles may be bent to face each other along the thickness direction and coupled onto the first branch, wherein optionally the one electrode tab bundle may be bent in the same direction as an adjacent one of the two electrode tab bundles and coupled onto the second branch.

In some examples, the plurality of electrode assemblies may include three electrode assemblies arranged in parallel (e.g., along the thickness direction), and one electrode tab bundle (e.g., coupled to the current collector) may be disposed on each of the three electrode assemblies.

A first width of the first branch may be greater than a second width of the second branch. The widths of the first and second branches may for example be measured along (e.g., parallel or substantially parallel to) the first side of the plurality of the electrode assemblies in a direction perpendicular to the extension direction along which the plurality of branches extend from the connecting portion (e.g., in a plane of the connecting portion and/or parallel to the side surface or edge of the connecting portion that the branches extend from). Additionally or alternatively, the widths of the first and second branches may for example be measured along the width direction. Put differently, in some examples, a first width of the first branch in the thickness direction may be greater than a second width of the second branch.

The first width of the first branch and the second width of the second branch may satisfy 1/3 * C1 ≤ C2 ≤ 1/1.5 * C1, where C1 represents the first width and C2 represents the second width. Put differently, the second width may be between 1/3 and 2/3 of the first width. In some examples, the second width may be between 2/5 and 3/5 of the first width and in one example one half of the first width.

A first length of the first branch and a second length of the second branch may be equal, wherein the first length and the second length may, for example, be measured along the extension direction.

Additionally or alternatively, in some examples, a second area of the second branch may be smaller than a first area of the first branch. The first and second areas may for example be cross-sectional areas of the respective branch along (e.g., parallel or substantially parallel to) the first side of the plurality of the electrode assemblies, for example in a plane of the connecting portion, in a plane parallel to the extension direction and the side surface or edge of the connecting portion that the branches extend from and/or in a plane parallel to the width and thickness directions. The first and second areas may in particular be cross-sectional areas of a surface of the respective branch that electrode tab bundle(s) is/are coupled to (e.g., of an upper or lower surface of the respective branch).

In some examples, the first area of the first branch and the second area of the second branch may satisfy 1/3 * S1 ≤ S2 ≤ 1/1.5 * S1, where S1 represents the first area and S2 represents the second area (i.e., the second area S2 of the second branch may be between 1/3 and 2/3 of the first area S1 of the first branch). The second area may for example be between 2/5 and 3/5 of the first area and in one example one half of the first area.

Additionally or alternatively, in some examples, a separation distance between the first branch and the second branch may satisfy 1/2 * C2 ≤ CD ≤ C1, where C1 represents the first width of the first branch, C2 represents the second width of the second branch, and CD represents the separation distance between the first branch and the second branch. The first width, the second width and the separation distance may for example be measured along the first side of the plurality of the electrode assemblies in a direction perpendicular to the extension direction along which the plurality of branches extend from the connecting portion (e.g., in a plane of the connecting portion and/or parallel to the side surface or edge of the connecting portion that the branches extend from). The separation distance CD between the first branch and the second branch may, for example, be between 1/4 C1 and C1, in some examples between 1/3 C1 and 2/3 C1. Additionally or alternatively, the separation distance CD between the first branch and the second branch may, for example, be between 1/2 C2 and 2 C2, in some examples between 2/3 C2 and 3/2 C2.

In some examples, the same number of electrode tab bundles (e.g., a respective single electrode tab bundle or preferably a respective pair of electrode tab bundles) may be coupled to the first branch and the second branch. In such examples, first and second branches may for example have the same width (i.e., the first width may be equal or substantially equal to the second width, e.g., differ by no more than 20%, in some examples no more than 10% and in one example no more than 5% from the second width) and/or the same area (i.e., the first area may be equal or substantially equal to the second area, e.g., differ by no more than 20%, in some examples no more than 10% and in one example no more than 5% from the second area).

The electrode tab bundles may be coupled to upper surfaces of the plurality of branches (e.g., to upper surfaces of the first branch and of the second branch). The upper surfaces of the branches may, for example, face away from the plurality of electrode assemblies (e.g., away from the first side of the electrode assembly arrangement and/or away from the electrodes of the electrode assemblies), for example towards the cap. The electrode tab bundles (e.g., the ends thereof) may, for example, be bent onto the upper surfaces of the branches so as to be arranged (e.g., extend to) between the plurality of branches and the cap.

In some examples, the electrode tab bundles may extend over (e.g., cover and, optionally, be coupled to) at least 50%, preferably at least 60%, in some examples at least 70%, in one example at least 80% and in one example at least 90% of a surface area of the plurality of branches (e.g., of an area of the surfaces of the plurality of branches that the electrode tab bundles are coupled to, e.g., the upper or lower surfaces).

The electrode tab bundles of the plurality of electrode assemblies may be arranged in a line along the thickness direction, e.g., as described above.

In some examples, the connection terminal (e.g., the connection portion of the current collector) may be disposed adjacent to a side end (e.g., a side edge or side face perpendicular to the width direction) of the plurality of electrode assemblies, e.g., adjacent in a direction of a major axis of (e.g., one or all of) the electrode assemblies along the first side of the plurality of electrode assemblies and/or adjacent in the extension direction. Put differently, the connection terminal may be disposed adjacent to a side end of the electrode assembly in the width direction.

Additionally or alternatively, the connection terminal may be disposed between the side end of the plurality of electrode assemblies and the electrode tab bundles. Put differently, the branches of the current collector may extend from the connection portion in a direction away from the side end, for example towards a center of the electrode assembly arrangement in the width direction.

The connection terminal may have a cylindrical shape. The connection terminal may, for example, be embodied as this cylindrical pin protruding from the connection portion of the current collector.

The connecting portion (e.g., the main support plate) and the plurality of branches may lie in the same plane (e.g., at a same height relative to the first side of the electrode assembly arrangement/at a same height along the height direction). Accordingly, no step or inclination may be formed between the connecting portion and the branches. Instead, the connecting portion and the plurality of branches may be formed as a single flat plate (e.g., having planar upper and lower surfaces).A flatness of the connecting portion (e.g., the main support plate) and the plurality of branches may be 0.05 to 2.

The flatness of the connecting portion and the plurality of branches (e.g., at least of a surface of the current collector formed by the connecting portion and the branches but excluding the connection terminal to which the electrode tab bundles are coupled and, optionally, of the surface of the current collector opposite thereto) may for example be a geometric tolerance (e.g., according to GD&T) specifying that all points on the connecting portion and the plurality of branches (e.g., on the respective surface) lie between two parallel planes separated by gap corresponding to the specified flatness in mm. For example, if the flatness is 0.1, this may mean that all points lie within a zone defined by to parallel planes with a gap of 0.1 mm therebetween, or put differently, that the surface must be able to pass through a narrow 0.1 mm gap between two perfectly flat parallel plates without any point on the surface making contact with the plates. The specified flatness may for example be measured using a (precision-machined) surface plate for placing the current collector thereon and a feeler gauge for measuring the flatness. Additionally or alternatively, one or more of a dial indicator method, a coordinate measuring machine, optical interferometry and/or laser scanning may be used for measuring the specified flatness.

At least a surface of the current collector (formed by the connecting portion and the branches but excluding the connection terminal) to which the electrode tab bundles are coupled (e.g., its upper surface) and, optionally, the surface of the current collector opposite thereto (e.g., its lower surface) may each have a flatness of no more than 2/no more than ±1 mm (e.g., all points on the respective surface may lie between parallel planes spaced 2 mm apart from each other), in some examples of no more than 1/no more than ±0.5 mm, in some examples of no more than 0.2/no more than ±0.1 mm, in one example of no more than 0.1/no more than ±0.05 mm and in one example of no more than 0.05/no more than ±0.025 mm.

In some examples, a (spatial) extent (e.g., a physical dimension or length) of the current collector in the extension direction along which the plurality of branches extend from the connecting portion is between 0.1 and 0.5 times, preferably between 0.25 and 0.375 times and in some examples between 0.30 and 0.35 times a (spatial) extent (e.g., a physical dimension or length) of the electrode assembly arrangement (e.g., an extent of the electrode assemblies) in the extension direction.

In some examples, the secondary battery may comprise a pair of current collectors (e.g., one for each polarity), each of which may for example be embodied as described herein and coupled to the electrode tab bundles of the respective polarity of the electrode assembly arrangement (wherein each electrode assembly may for example include an electrode of each polarity and a respective electrode tab bundle for each polarity formed on the electrode of the respective polarity and coupled to the plurality of branches of the respective current collector). The two current collectors may for example be arranged in a mirror-symmetric or point-symmetric arrangement at the first side of the electrode assembly arrangement.

An overall length of the current collector (e.g., an overall length of the pair of current collectors corresponding to the sum of their respective spatial extents/lengths, which may be the same) in the width direction may be 0.5 to 0.75 times a length (e.g., spatial extent) of the electrode assembly (in the width direction).

In some examples, the current collector may be arranged in and/or on an insulating holder, for example such that the bottom surface of the current collector and/or a side surface (e.g., an edge) of the current collector extending between its bottom and upper surfaces is coupled to (e.g., held or secured by) the insulating holder. The current collector may, for example, be arranged in and/or on the insulating holder by means of a press and/or snap fit and/or by one or more fastening means such as clips, clamps or hooks. In some examples, the insulating holder may extend over (e.g., cover and, optionally, be in contact with) the bottom surface of the current collector.

The insulating holder may support (e.g., strengthen, fix and/or hold) the current collector. The insulating holder may support the current collector (e.g., at least the branches thereof) laterally (e.g., in a plane of the current collector and/or along the first side of the electrode assembly arrangement). The insulating holder may for example be configured to prevent and/or resist lateral (in-plane) deformation of the current collector (e.g., of the branches thereof). Additionally or alternatively, the insulating holder may support the current collector (e.g., at least the branches thereof) normally/in a normal direction (e.g., perpendicular to a plane of the current collector and/or perpendicular to the first side of the electrode assembly arrangement, e.g., in the vertical and/or height direction). The insulating holder may for example be configured to prevent and/or resist normal (out-of-plane) deformation of the current collector (e.g., of the branches thereof).

Optionally, the insulating holder may be arranged between the current collector (e.g., the connection portion and/or the plurality of branches thereof) and the first side of the plurality of the electrode assemblies (e.g., between the current collector and the electrodes of the plurality of electrode assemblies). The insulating holder may, for example, be configured to protect the electrode assemblies (e.g., the electrodes and/or separators thereof) when welding the electrode tab bundles (e.g., to the current collector).

In some examples, the insulating holder may comprise one or more cutouts (e.g., cutout grooves or recesses) for bending electrode tab bundles onto the plurality of branches (e.g., the upper surfaces thereof). The cutouts may for example be formed in a side surface (e.g., a side wall or side frame) of the insulating holder extending along (e.g., covering) a side surface (e.g., an edge) of a branch of the current collector (with the side surface of the branch extending between upper and lower surfaces thereof). Each of the cutouts may be configured to receive (e.g., accommodate) and, optionally, guide a respective electrode tab bundle.

In some examples, an insulating holder supporting the current collector may be coupled to a lower portion (e.g., a bottom surface) of the current collector.

Additionally or alternatively, for some or all of the electrode tab bundles, at least a portion of the respective electrode tab bundle may in some examples be bent (e.g., held in or forced into a bent or curved state) to be parallel or substantially parallel to the first side of the plurality of electrode assemblies (e.g., parallel or substantially parallel to an upper surface of the respective electrode assembly and/or parallel or substantially parallel to the thickness and width directions) by an insulating tape. For example, at least a proximal portion (for example a portion adjacent to, e.g., extending from and/or in contact with, the first side of the electrode assembly arrangement, e.g., adjacent to the upper surface of the respective electrode assembly) of some or all of the electrode tabs within the respective electrode tab bundle (e.g., of at least some or all of the electrode tabs arranged between the current collector and the first side of the electrode assembly arrangement) may be bent by the insulating tape.

The insulating tape may be disposed between the current collector and the first side of the plurality of electrode assemblies (e.g., between the current collector and the electrodes of the electrode assemblies and/or between the current collector and the upper surface of the electrode assemblies). Some or all of the insulating tape may be spaced apart from the current collector (e.g., a bottom surface thereof). Additionally or alternatively, the insulating tape may cover (e.g., be in contact with) at least part of the bottom surface of the current collector (e.g., at least part of the bottom surface of a branch of the current collector that the respective electrode tab bundle is coupled to).

In some examples, at least a portion of the electrode tab bundle may be bent to be parallel to an upper surface of the electrode assembly by an insulating tape, and the insulating tape may be disposed between the current collector and the upper surface of the electrode assembly.

In some examples, the secondary battery may further include a vent portion (e.g., a vent structure) formed in the casing (e.g., a side surface or a bottom surface thereof) or in the cap (e.g., in the cap assembly). A longitudinal axis direction (e.g., a major axis/direction or axis of largest extent) of the vent portion may be parallel or substantially parallel to the width direction or may intersect (e.g., be perpendicular or substantially perpendicular to the width direction). Additionally or alternatively, the longitudinal axis direction may be parallel or substantially parallel to the extension direction, or may intersect (e.g., be perpendicular or substantially perpendicular) to the extension direction.

The secondary battery according to the present disclosure may include any combination of the features described herein. Put differently, unless explicitly stated or otherwise directly and unambiguously apparent, all of the features described herein are compatible and may be combined with each other (independently of the presence or absence of other features) in the secondary battery according to the present disclosure.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view illustrating a secondary battery according to a first embodiment of the present disclosure;
FIG. 2 is a cross-sectional view taken along line A1-A1 of FIG. 1;
FIG. 3 is a perspective view illustrating a state in which a current collector is coupled to a plurality of electrode assemblies according to the first embodiment of the present disclosure;
FIG. 4 is a plan view illustrating the plurality of electrode assemblies of FIG. 3;
FIG. 5 is a plan view illustrating a state in which an electrode tab bundle is coupled to the current collector according to the first embodiment of the present disclosure;
FIG. 6 is a perspective view illustrating the current collector according to the first embodiment of the present disclosure;
FIG. 7 is a cross-sectional view taken along line A2-A2 of FIG. 3;
FIG. 8 is a side view illustrating an electrode in which the electrode tab bundle is formed according to the first embodiment of the present disclosure;
FIG. 9 is a view illustrating a state in which the electrode tab bundle of the plurality of electrode assemblies is subjected to first welding according to the first embodiment of the present disclosure;
FIG. 10 is a perspective view illustrating a current collector according to a second embodiment of the present disclosure;
FIG. 11 is a cross-sectional view illustrating a state in which the current collector of FIG. 10 is coupled to an electrode assembly;
FIG. 12 is a plan view illustrating a state in which an electrode tab bundle is coupled to a current collector according to a third embodiment of the present disclosure;
FIG. 13 is a side view illustrating an electrode in which an electrode tab bundle is formed according to the third embodiment of the present disclosure;
FIG. 14 is a plan view illustrating a state in which a current collector is coupled to a plurality of electrode assemblies according to a fourth embodiment of the present disclosure;
FIG. 15 is a partial plan view illustrating a state in which a current collector is coupled to a plurality of electrode assemblies according to a fifth embodiment of the present disclosure;
FIG. 16 is a partial plan view illustrating a state in which a current collector is coupled to a plurality of electrode assemblies according to a sixth embodiment of the present disclosure;
FIG. 17 is a partial plan view illustrating a state in which a current collector is coupled to a plurality of electrode assemblies according to a seventh embodiment of the present disclosure;
FIG. 18 is a partial plan view illustrating a state in which a current collector is coupled to a plurality of electrode assemblies according to an eighth embodiment of the present disclosure;
FIG. 19 is a perspective view illustrating a vent portion according to a ninth embodiment of the present disclosure, as viewed from below;
FIG. 20 is a perspective view illustrating a secondary battery according to a tenth embodiment of the present disclosure;
FIG. 21 is a plan view illustrating the secondary battery of FIG. 20 as viewed from above; and
FIG. 22 is a perspective view illustrating a vent portion according to an eleventh embodiment of the present disclosure, as viewed from below.

### DETAILED DESCRIPTION

Since the present disclosure may be modified in various forms and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

For ease of description, various features and elements of the present disclosure may be disclosed in combination in the embodiments described below. Unless mentioned otherwise, this does, however, not imply any functional or structural link between the respective features and elements. Each individual one of the features and elements (and each combination of features and elements) described below may also be present in the secondary battery according to the present disclosure in isolation and separate from the other features and elements of the respective embodiment. This applies in particular to the current collector, which may also be provided individually, i.e., not as part of an (e.g., assembled) secondary battery but as a separate part (e.g., separate from the other components of the secondary battery).

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, exemplary embodiments of the present disclosure will be described in detail with reference to the accompanying drawings. It should be noted that like reference numerals may refer to like elements throughout the attached drawings. Details of well-known configurations and functions may be omitted to avoid unnecessarily obscuring the gist of the present disclosure. For the same reason, in the accompanying drawings, some elements may be enlarged, omitted, or depicted schematically.

As detailed above, directions, orientations and similar geometric terms may be defined herein relative to a casing of the secondary battery, in particular relative to a side of the casing at which a cap of the secondary battery is arranged. The side of the casing or of the secondary battery at which the cap is arranged may be referred to as the top (or upper) side of the casing and of the secondary battery, respectively, and the side of the casing or of the secondary battery opposite to the side at which the cap is arranged may accordingly be referred to as a lower or bottom side, respectively (without, however, intending to imply any particular absolute orientation of the secondary battery relative to the direction of gravity). The direction from the lower side to the upper side may be referred to as the vertical direction (or vertically) and may for example correspond to the Z axis/direction in the figures. A direction perpendicular to the vertical direction (e.g., parallel to the upper side) may be referred to as the horizontal direction (or horizontally) and may for example be parallel to the XY plane in the figures.

In relation to the electrode assemblies, a direction from a second side (e.g., a bottom/lower side) of the respective electrode assembly or of the electrode assembly arrangement (i.e., the plurality of electrode assemblies as a whole) opposite to a first side (e.g., top/upper side) where the electrode tab bundles are formed may be referred to as a height direction (of the respective electrode assemblies and of the electrode assembly arrangement, respectively), which may correspond to the Z axis/direction in the figures (and to the vertical direction). The direction of smallest extent (e.g., along a minor axis) of a given electrode assembly, e.g., in a plane perpendicular to the height direction, may be referred to as the thickness direction of the respective electrode assembly. The thickness direction may correspond to the X axis/direction in the figures and may be the same for all electrode assemblies. The width direction of a given electrode assembly may in turn refer to a direction along a major axis or axis/(non-diagonal) direction of largest extent (e.g., largest physical dimension) of the respective electrode assembly in a plane perpendicular to the height direction. The width direction (which may be the same for all electrode assemblies) may correspond to the Y axis/direction in the figures and may be perpendicular to the height and thickness directions of the respective electrode assembly.

Hereinafter, a secondary battery according to a first embodiment of the present disclosure will be described.

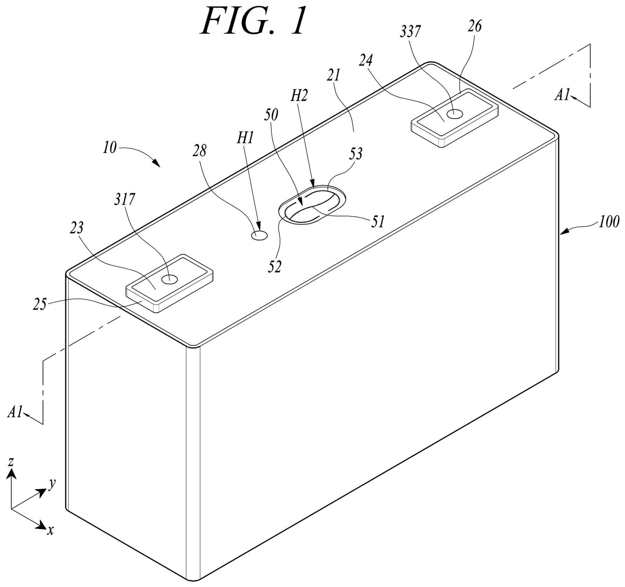

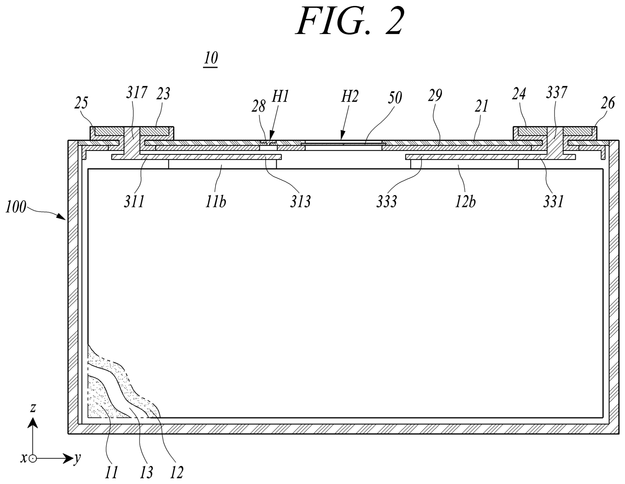

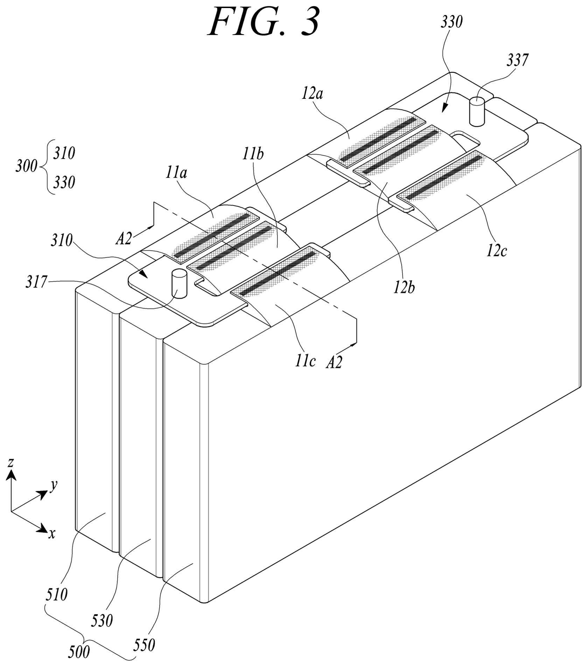

FIG. 1 is a is a perspective view illustrating a secondary battery according to a first embodiment of the present disclosure, FIG. 2 is a cross-sectional view taken along line A1-A1 of FIG. 1, and FIG. 3 is a perspective view illustrating a state in which a current collector is coupled to a plurality of electrode assemblies according to the first embodiment of the present disclosure.

Referring to FIGS. 1 to 3, a secondary battery 10 according to an embodiment of the present disclosure includes a plurality of electrode assemblies 500 (e.g., between three and six electrode assemblies, for example three electrode assemblies 510, 530, 550 as illustrated in FIG. 3). The plurality of electrode assemblies 500 may collectively be referred to as the electrode assembly arrangement 500 or the electrode assemblies 500 herein. Each electrode assembly 510, 530, 550 includes a positive electrode 11 and a negative electrode 12. The secondary battery 10 further includes a casing 100 accommodating the electrode assemblies 500, a cap plate 21 (as an example or part of a cap or cap assembly) coupled to the casing 100 and external terminals 23 and 24 installed on the cap plate 21. The secondary battery 10 may further include an upper insulator 29 disposed between the cap plate 21 and the electrode assemblies 500, and/or a vent portion 50 disposed on the cap plate 21.

Each of the electrode assemblies 500 may be configured to perform charging and discharging. Each of the electrode assemblies 500 may be implemented in various forms, such as an all-solid-state electrode assembly, a lithium-ion electrode assembly, or a sodium-ion electrode assembly.

Each electrode assembly 500 may include a positive electrode 11, a negative electrode 12, and, optionally, a separator 13 interposed between the positive electrode 11 and the negative electrode 12. The positive electrode 11, the separator 13, and the negative electrode 12 may for example be configured in a stacked structure or a wound structure in a jelly-roll form.

Further, the electrode assembly 500 may have a structure in which the positive electrode 11 and the negative electrode 12 are alternately inserted between parts of the separator 13 (e.g., parts of a separator 13 folded in a zigzag shape, or plates or sheets of a separator 13 inserted between the positive and negative electrodes 11, 12). Further, the electrode assembly 500 may be implemented in various forms, such as an all-solid-state type that does not include a separator.

The positive electrode 11 and the negative electrode 12may both be examples of an electrode as claimed herein The positive electrode 11 and the negative electrode 12 may each include a coating portion, which may be a region where an active material is applied onto a substrate such as a metal foil The positive electrode 11 and the negative electrode 12 may each further include an uncoated portion where the active material is not applied. Positive-electrode uncoated portions 11a, 11b, and 11c may protrude from side ends of the positive electrode 11 (e.g., at a first/upper side thereof). Negative-electrode uncoated portions 12a, 12b, and 12c may protrude from side ends (e.g., at a first/upper side thereof) of the negative electrode 12. The positive-electrode uncoated portions 11a, 11b, and 11c and the negative-electrode uncoated portions 12a, 12b, and 12c may protrude in the same direction (e.g., the vertical direction) toward the cap plate 21, that is, protrude in a longitudinal (height/length) direction of the electrode assembly 500, corresponding to a z-axis direction.

The positive-electrode uncoated portions 11a, 11b, and 11c and the negative-electrode uncoated portions 12a, 12b, and 12c may be formed in a tab shape (e.g., so as to form electrode tabs and in particular thin-film electrode tabs). The positive-electrode uncoated portions 11a, 11b, and 11c and the negative-electrode uncoated portions 12a, 12b, and 12c may be spaced apart from each other in a width direction of the electrode assembly 500, corresponding to a y-axis direction. The positive-electrode uncoated portions 11a, 11b, and 11c and the negative-electrode uncoated portions 12a, 12b, and 12c may be stacked in a thickness direction of the electrode assembly 500, corresponding to an x-axis direction. In this case, the stacked positive-electrode uncoated portions 11a, 11b, and 11c (of the respective electrode assembly) may form a first electrode tab bundle 11a, 11b, and 11c, and the stacked negative-electrode uncoated portions 12a, 12b, and 12c (of the respective electrode assembly) may form a second electrode tab bundle 12a, 12b, and 12c. The first electrode tab bundles 11a, 11b, 11c and the second electrode tab bundles 12a, 12b, 12c may be arranged at a first/upper side (e.g., a first/upper surface) of the electrode assembly arrangement 500 as illustrated in FIGS. 2 and 3. The first electrode tab bundles 11a, 11b, 11c and the second electrode tab bundles 12a, 12b, 12c may both be examples of electrode tab bundles as claimed herein.

Further, the first electrode tab bundle 11a, 11b, and 11c may be electrically connected to a first external terminal 23 via a first current collector 310. The second electrode tab bundle 12a, 12b, and 12c may be electrically connected to a second external terminal 24 via a second current collector 330. Detailed descriptions of a coupling structure between the first electrode tab bundle 11a, 11b, and 11c and the first current collector 310 and a coupling structure between the second electrode tab bundle 12a, 12b, and 12c and the second current collector 330 according to the present embodiment will be provided later.

The separator 13 may be disposed between the positive electrode 11 and the negative electrode 12.The separator 13 may prevent a short circuit and enable movement of ions. When the secondary battery 10 is implemented as an all-solid-state battery, a solid electrolyte may be positioned between the positive electrode 11 and the negative electrode 12 instead of the separator 13.

The casing 100 may be formed in a box shape (as an example of a prismatic shape) having an internal space accommodating the electrode assembly 500. The casing 100 may be made in various shapes, such as a prismatic shape or a cylindrical shape. A plurality of electrode assemblies 500 may be inserted into the casing 100.

An electrolyte may be accommodated together with the electrode assembly 500 inside the casing 100. The electrolyte may be in a liquid, solid, or gel state.

The cap plate 21 may be formed as a plate member covering an opening of the casing 100. The cap plate 21 may have a shape corresponding to a shape of the opening of the casing 100. The cap plate 21 may be fixed to the casing 100, e.g., by welding.

An electrolyte injection hole H1 for injecting the electrolyte and/or a vent hole H2 in which a vent portion 50 is installed may be formed in the cap plate 21. A sealing plug 28 for closing the electrolyte injection hole H1 may be installed in the electrolyte injection hole H1. The vent portion 50 that is opened (e.g., configured to open) at a preset pressure may be formed in the vent hole H2.

In this embodiment, the vent portion 50 may extend long in the width direction corresponding to the y-axis direction. The vent portion 50 may have a shape elongated in the width direction (y-axis direction), such as a rectangular shape, an oblong shape, or a rounded-rectangle shape.

Further, the vent portion 50 may be fixed to the cap plate 21, e.g., by welding. The vent portion 50 may be fixed to a lower surface of the cap plate 21, and/or may be fixed to an upper surface of the cap plate 21.

The vent portion 50 may include two side notches 52 and 53 and a connection notch 51 connecting the side notches 52 and 53. The connection notch 51 and the side notches 52 and 53 may be formed as elongated grooves, and may, e.g., be grooves having a trapezoidal cross-sectional shape. However, the present disclosure is not limited thereto, and the connection notch 51 and the side notches 52 and 53 may have various cross-sectional shapes, such as a triangular shape or an arcuate shape.

The connection notch 51 may be formed as a curved line to form a wavy shape or an S-shape. The two side notches 52 and 53 may be formed in an arcuate shape and may be convex in opposite directions, while protruding convexly toward an outer side in the width direction (y-axis direction) of the vent portion 50. The first side notch 52 and the second side notch 53 may be connected to the connection notch 51, and the first side notch 52 and the second side notch 53 may have the same structure and be arranged in line symmetry.

In this embodiment, the vent portion 50 is formed to extend long along the width direction (y-axis direction). Since a distance between the first current collector 310 and the second current collector 330 is sufficiently large, gas may be smoothly discharged without interference from the first current collector 310 and the second current collector 330 even when the vent portion 50 is disposed in the width direction (y-axis direction).

An upper insulator 29 may be disposed under the cap plate 21. The upper insulator 29 may be formed as a plate parallel to the cap plate 21 and may for example extend in the width direction (y-axis direction) of the electrode assembly 500.

The external terminals 23 and 24 may be coupled to the cap plate 21. One or two external terminals 23 and 24 may be installed on the cap plate 21. When two external terminals 23 and 24 are installed on the cap plate 21, a first external terminal 23 may be configured as a positive terminal, and a second external terminal 24 may be configured as a negative terminal. When a single external terminal is installed on the cap plate 21, the casing 100 may be charged as a negative (or positive) electrode or the negative (or positive) terminal may be arranged elsewhere, e.g., on a side opposite to the cap plate 21.

The first external terminal 23 and the second external terminal 24 may be formed in a plate shape. A gasket 25 for insulation may be disposed between the first external terminal 23 and the cap plate 21. Additionally or alternatively, a gasket 26 for insulation may also be disposed between the second external terminal 24 and the cap plate 21. In addition, the gaskets 25 and 26 may extend downward and may, e.g., be positioned between the current collectors 310 and 330 and the cap plate 21. Each of the gaskets 25 and 26 may be formed as a single member or may be divided into a plurality of parts.

The first external terminal 23 and the second external terminal 24 may be formed in a plate shape A hole into which a connection terminal 317 or 337 of the first current collector 310 or the second current collector 330 is inserted may be formed at a central portion of the first external terminal 23 or the second external terminal 24.

In this embodiment, the electrode assembly 500 may include (e.g., consist of) three electrode assemblies. Each of the electrode assemblies 510, 530, and 550 may be an electrode assembly having the same internal structure.

The plurality of electrode assemblies 510, 530, and 550 may be stacked along the thickness direction (x-axis direction) of the electrode assembly 500. Each of the plurality of electrode assemblies 510, 530, and 550 may include the first electrode tab bundle 11a, 11b, and 11c corresponding to one positive electrode and the second electrode tab bundle 12a, 12b, and 12c corresponding to one negative electrode. Each of the electrode assemblies 510, 530, and 550 may be provided with the same number of first electrode tab bundles 11a, 11b, and 11c and the same number of second electrode tab bundles 12a, 12b, and 12c. That is, in each of the first electrode assembly 510, the second electrode assembly 530, and the third electrode assembly 550, the first electrode tab bundles 11a, 11b, and 11c may include an identical number of stacked tabs. Also, in each of the first electrode assembly 510, the second electrode assembly 530, and the third electrode assembly 550, the second electrode tab bundles 12a, 12b, and 12c may include an identical number of stacked tabs.

At this time, the plurality of first electrode tab bundles 11a, 11b, and 11c may be arranged in a line, e.g., along the thickness direction (x-axis direction). The plurality of second electrode tab bundles 12a, 12b, and 12c may also be arranged in a line, e.g., along the thickness direction (x-axis direction). The plurality of first electrode tab bundles 11a, 11b, and 11c may be positioned at one side end along the width direction (y-axis direction) of the electrode assembly 500, while the plurality of second electrode tab bundles 12a, 12b, and 12c may be positioned at the other side end along the width direction (y-axis direction) of the electrode assembly 500.

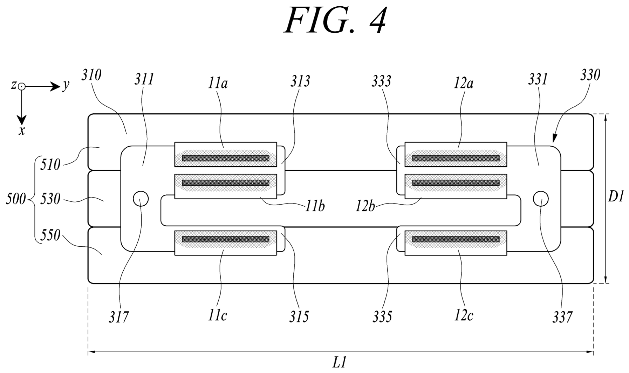

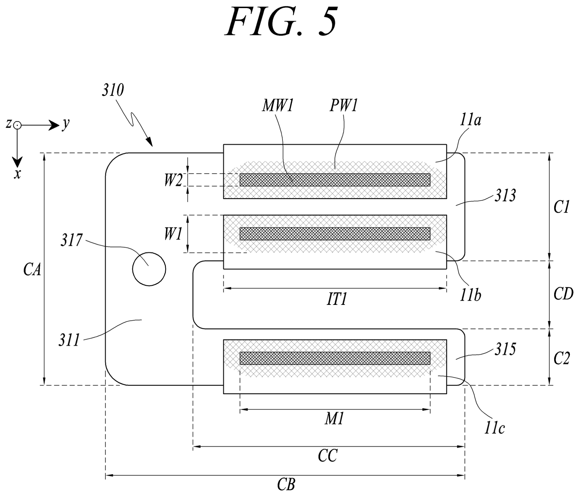

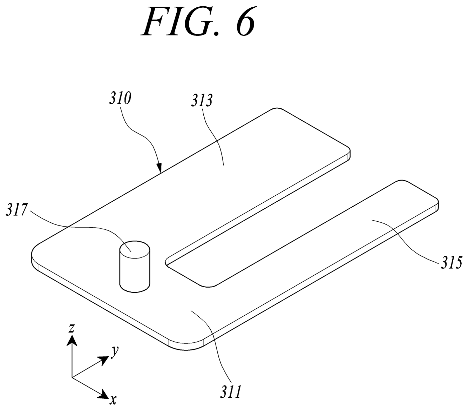

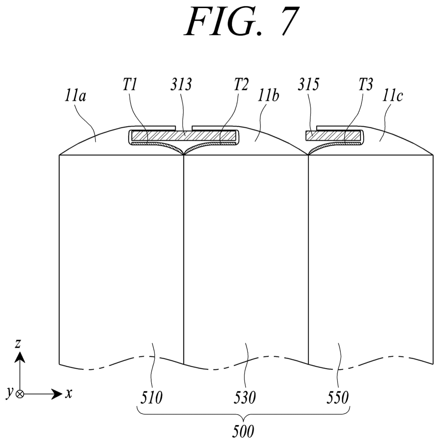

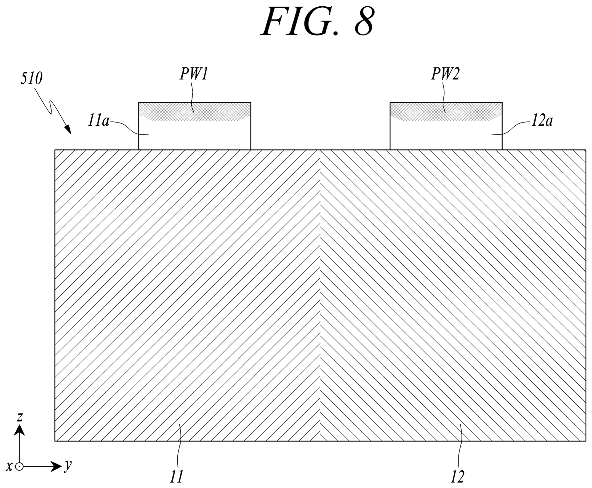

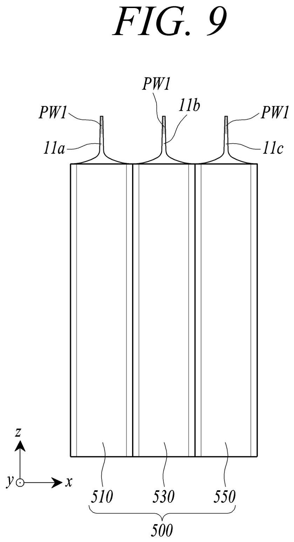

FIG. 4 is a plan view illustrating the plurality of electrode assemblies of FIG. 3, FIG. 5 is a plan view illustrating a state in which the electrode tab bundle is coupled to the current collector according to the first embodiment of the present disclosure, FIG. 6 is a perspective view illustrating the current collector according to the first embodiment of the present disclosure, FIG. 7 is a cross-sectional view taken along line A2-A2 of FIG. 3, FIG. 8 is a side view illustrating an electrode in which the electrode tab bundle is formed according to the first embodiment of the present disclosure, and FIG. 9 is a view illustrating a state in which the electrode tab bundle of the plurality of electrode assemblies is subjected to first welding according to the first embodiment of the present disclosure.

Referring to FIGS. 4 to 9, in this embodiment, the first electrode assembly 510, the second electrode assembly 530, and the third electrode assembly 550 are stacked along the thickness direction (x-axis direction). The first electrode tab bundles 11a, 11b, and 11c of the positive electrode may be coupled to the first current collector 310. The second electrode tab bundles 12a, 12b, and 12c of the negative electrode may be coupled to the second current collector 330.

In this embodiment, the first current collector 310 may include a connecting portion embodied as a main support plate 311 and a plurality of branches 313 and 315. The main support plate 311 may be a flat plate-shaped member that supports the first connection terminal 317. The first connection terminal 317 may be positioned on an upper surface of the main support plate 311. The first connection terminal 317 may be electrically connected to the first external terminal 23 coupled to the cap plate 21. In this case, the first connection terminal 317 may have a cylindrical shape (e.g., be embodied as a cylindrical pin protruding upwards from the upper surface of the main support plate 311).

The plurality of branches 313 and 315 may be formed on a side surface (e.g., an edge) of the main support plate 311. Each of the plurality of branches 313 and 315 may extend along a (common) extension direction, which may be/correspond to the width direction (y-axis direction). The plurality of branches 313 and 315 may also be flat plate-shaped members, similar to the main support plate 311. In this embodiment, the main support plate 311 and the plurality of branches 313 and 315 of the first current collector 310 may be formed as a single flat plate-shaped member, that is, may lie in the same plane (without any step or inclination arranged therebetween).

The first branch 313 and the second branch 315 may have rectangular shapes elongated in the extension/width direction (y-axis direction). Thereby, the first current collector 310 according to this embodiment may have an approximately U-shaped configuration.

The plurality of branches 313 and 315 may include the first branch 313 and the second branch 315 that are respectively formed to extend from a side surface of the main support plate 311. The first branch 313 and the second branch 315 may be spaced apart from each other along the thickness direction (x-axis direction). In this case, the first branch 313 and the second branch 315 may be spaced apart by a separation distance CD.

In this embodiment, a width of the first branch 313 and a width of the second branch 315 may be different from each other. The first branch 313 may have a first width C1, and the second branch 315 may have a second width C2. Here, the first width C1 and the second width C2 respectively represent widths of the first branch 313 and the second branch 315 in the thickness direction (x-axis direction).

Specifically, the first width C1 of the first branch 313 may be greater than the second width C2 of the second branch 315. Thereby, two electrode tab bundles, that is, the first electrode tab bundle 11a and the first electrode tab bundle 11b, may be coupled to an upper surface of the first branch 313, and one electrode tab bundle, that is, the first electrode tab bundle 11c, may be coupled to an upper surface of the second branch 315. That is, different numbers of electrode tab bundles may be coupled to the first branch 313 and the second branch 315.

On the upper surface of the first branch 313, the first electrode tab bundle 11a and the first electrode tab bundle 11b may be bent to face each other along the thickness direction (x-axis direction) and be coupled thereto. The first electrode tab bundle 11a and the first electrode tab bundle 11b may be bent in opposite directions along the thickness direction (x-axis direction) and coupled, e.g., welded, to the upper surface of the first branch 313.

On the upper surface of the second branch 315, one electrode tab bundle, that is, the first electrode tab bundle 11c may be bent in the same direction as an adjacent first electrode tab bundle 11b and coupled thereto (e.g., to the second branch 315).

Thus, the first electrode tab bundle 11b and the first electrode tab bundle 11c may be bent in the same direction. The first electrode tab bundle 11a may be bent in a direction different from that of the first electrode tab bundle 11b and the first electrode tab bundle 11c and coupled on the (e.g., first) branch.

In this case, the first width C1 of the first branch 313 and the second width C2 of the second branch 315 may satisfy the following [Equation 1].$1 / 3 * C 1 \leq C 2 \leq 1 / 1.5 * C 1$

That is, the first width C1 of the first branch 313 may be approximately 1.5 times to 3 times the second width C2 of the second branch 315. When the first width C1 of the first branch 313 is less than 1.5 times the second width C2 of the second branch 315, portions of the first electrode tab bundle 11a and the first electrode tab bundle 11b coupled to the upper surface of the first branch 313 may overlap each other. As a result, electrical resistance caused by the first electrode tab bundle 11a and the first electrode tab bundle 11b coupled to the upper surface of the first branch 313 may increase, and coupling strength with the first current collector 310 may be weakened due to the overlap of the first electrode tab bundle 11a and the first electrode tab bundle 11b. On the other hand, when the first width C1 of the first branch 313 is greater than 3 times the second width C2 of the second branch 315, an area of the first current collector 310 may increase, such that resistance to current flowing through the first current collector 310 may increase.

Meanwhile, a first area S1 of the first branch 313 and a second area S2 of the second branch 315 may satisfy the following [Equation 2]. $1 / 3 * S 1 \leq S 2 \leq 1 / 1.5 * S 1$

That is, the first area S1 of the first branch 313 may be approximately 1.5 times to 3 times the second area S2 of the second branch 315. When the first area S1 of the first branch 313 is less than 1.5 times the second area S2 of the second branch 315, portions of the first electrode tab bundle 11a and the first electrode tab bundle 11b coupled to the upper surface of the first branch 313 may overlap each other. On the other hand, when the first area S1 of the first branch 313 is greater than 3 times the second area S2 of the second branch 315, an overall area of the first current collector 310 may increase, such that resistance to current flowing through the first current collector 310 may increase.

Meanwhile, the first width C1 of the first branch 313, the second width C2 of the second branch 315, and the separation distance CD may satisfy the following [Equation 3].$1 / 2 * C 2 \leq CD \leq C 1$

That is, the separation distance CD may be less than or equal to the first width C1 of the first branch 313 and greater than or equal to one half of the second width C2 of the second branch 315. When the separation distance CD deviates from the above range, the electrode tab bundles coupled to the upper surfaces of the branches may not be coupled to the upper surfaces of the branches while protruding upward from central portions of the respective electrode assemblies. Instead, the electrode tab bundles may protrude upward from positions adjacent to side surfaces of the electrode assemblies, deviating from the central portions of the electrode assemblies, so as to be coupled to the upper surfaces of the branches. In this case, lengths of the electrode tab bundles protruding from the respective electrode assemblies increase as compared to a case in which the electrode tab bundles are disposed at central portions, thereby increasing manufacturing costs.

Further, a length CC of the first branch 313 and the second branch 315 in the extension direction, e.g., in the width direction (y-axis direction), may be 0.6 to 0.9 times an overall length CB of the first current collector 310 (e.g., in the extension direction). That is, the length CC of the first branch 313 and the second branch 315 may occupy approximately one half or more of the overall length CB of the first current collector 310. In this case, a length IT1 of the first electrode tab bundles 11a, 11b, and 11c (e.g., in the extension and/or width direction) coupled to upper surfaces of the first branch 313 and the second branch 315 may be 0.7 to 0.95 times the length CC of the first branch 313 and the second branch 315. Likewise, the length IT1 of the first electrode tab bundles 11a, 11b, and 11c may occupy approximately one half or more of the length CC of the first branch 313 and the second branch 315.

Meanwhile, the overall length of the current collector 300, which is a sum of the length CB of the first current collector 310 and the length CB of the second current collector 330 in the extension and/or width direction (y-axis direction), may be 0.5 to 0.75 times a length L1 of the electrode assembly 500. When the electrode assembly 500 is viewed from above, the above range may represent a ratio of a portion of the length of the electrode assembly 500 (e.g., the first side thereof) that is occupied by the entire current collector 300 in the width direction (y-axis direction). When the overall length of the current collector 300 exceeds the above range, a space occupied by the current collector 300 in the width direction (y-axis direction) increases, thereby causing greater constraints on arranging the vent portion 50. The vent portion 50 is arranged in an empty space where the electrode tab, the current collector, and the like are not positioned in a vertical direction, that is, in a position where it does not overlap with the electrode tab, the current collector, and the like in the vertical direction. When the above range is exceeded, such empty space is reduced, and thus constraints on placement of the vent portion 50 may occur.

Therefore, as in this embodiment, when the ratio occupied by the entire current collector 300 satisfies the above range, the position of the vent portion 50 may be freely selected, and the direction of the vent portion 50 may be freely determined. Here, the direction of the vent portion 50 refers to a direction in which a longitudinal side of the vent portion 50 extends, and the vent portion 50 may be arranged in the width direction (y-axis direction), that is, horizontally, or may be arranged in the thickness direction (x-axis direction), that is, vertically.

In this embodiment, the entire first current collector 310 may be formed as a single flat plate-shaped member, and the flatness of the first current collector 310 may be in a range of 0.05 to 2. The flatness represents a degree to which the first current collector 310 is planar, and a smaller value indicates a flatter configuration. When the flatness of the first current collector 310 exceeds 2, a portion of the first current collector 310 may come into contact with the upper surface of the electrode assembly 500 disposed below, thereby causing a short circuit or the like. Thus, when the flatness of the first current collector 310 falls within the corresponding range, even if the first electrode tab bundles 11a, 11b, and 11c are coupled to the upper surface of the first current collector 310, a short circuit with the electrode assembly 500 may be prevented.

Meanwhile, the second current collector 330 may have the same shape as the first current collector 310. In this embodiment, the first current collector 310 and the second current collector 330 may be disposed symmetrically on the electrode assembly 500 with respect to the thickness direction (x-axis direction), e.g., in a mirror-symmetric arrangement.

The second current collector 330 may include a connection portion embodied as a main support plate 331 and a plurality of branches 333 and 335. The main support plate 331 may be a flat plate-shaped member that supports a second connection terminal 337. The second connection terminal 337 may be positioned on an upper surface of the main support plate 331, The second connection terminal 337 may be electrically connected to the second external terminal 24 coupled to the cap plate 21. In this case, the second connection terminal 337 may have a cylindrical shape.

The first and second branches 333 and 335 may be formed to extend from a side surface of the flat main support plate 331 along the width direction (y-axis direction). The first branch 333 and the second branch 335 may be spaced apart from each other along the thickness direction (x-axis direction).

As with the first current collector 310, widths of the first branch 333 and the second branch 335 of the second current collector 330 may be different from each other. Specifically, the width of the first branch 333 may be greater than the width of the second branch 335. Thereby, two negative-electrode tab bundles, that is, a second negative-electrode tab bundle 12a and a second negative-electrode tab bundle 12b, may be coupled to the upper surface of the first branch 333 of the second current collector 330. In addition, one negative-electrode tab bundle, that is, a second negative-electrode tab bundle 12c, may be coupled to the upper surface of the second branch 335 of the second current collector 330.

In this embodiment, a width of the first branch 333 of the second current collector 330, a width of the second branch 335, and a separation distance between the first branch 333 and the second branch 335 may be the same as those of the first current collector 310.

As illustrated in FIG. 4, the branches 313 and 315 of the first current collector 310 and branches 333 and 335 of the second current collector 330 may extend toward the center of the electrode assembly 500 along the extension and/or width direction (y-axis direction). That is, ends of the branches 313 and 315 of the first current collector 310 and ends of the branches 333 and 335 of the second current collector 330 may be disposed to face each other.

The first connection terminal 317 of the first current collector 310 and the second connection terminal 337 of the second current collector 330 may be disposed adjacent to opposite side ends of the electrode assembly 500 in the width direction (y-axis direction). The first connection terminal 317 may be disposed adjacent to a left side end of the electrode assembly 500, and the second connection terminal 337 may be disposed adjacent to a right side end of the electrode assembly 500.

Referring to FIGS. 8 and 9, the first electrode tab bundle 11a of the first electrode assembly 510 is formed by closely fixing ends (e.g., distal ends) of uncoated portions of positive electrodes protruding upward from the first electrode assembly 510 to each other by first welding (e.g., by a first weld). Before being coupled to the upper surface of the first current collector 310, the uncoated portions of the positive electrodes (e.g., the electrode tabs of the first electrode tab bundle 11a) are gathered toward the center of the first electrode assembly 510, e.g., using a tab guide (not shown). Ends of the gathered uncoated portions of the positive electrodes are fixed by the first welding (thus, e.g., forming or fixing the first electrode tab bundle 11a). By the first welding, a first welding region PW1 may be formed at an end of the first electrode tab bundle 11a of the positive electrodes (e.g., the first weld may form or extend over a first welding region PW1).

In this case, the first welding (first weld) may be formed to extend long along the width direction (y-axis direction). The first welding may have various shapes, such as a linear shape, a spiral shape, or a dot shape.

The first welding may for example be welding (e.g., a weld) formed or performed to prevent the ends of the first electrode tab bundle 11a from being separated from each other while the first electrode tab bundle 11a is bent and fixed onto the first current collector 310. The first welding may correspond to a pre-welding (PW) in which, e.g., only the ends of the first electrode tab bundle 11a are fixed to each other. In this case, ultrasonic welding, laser welding, or the like may be applied as the first welding. Preferably, the ultrasonic welding may be applied as the first welding.

Similarly, the first electrode tab bundle 11b of the first electrode assembly 530 and the first electrode tab bundle 11c of the first electrode assembly 550 may also be formed by coupling ends of uncoated portions of positive electrodes in the same manner to form bundles. Further, the same first welding regions PW1 may be formed at ends of the first electrode tab bundles 11b and 11c of the positive electrodes by the first welding.

In addition, the second electrode tab bundles 12a, 12b, and 12c of the first electrode assembly 510 may also be formed by closely fixing ends of uncoated portions of negative electrodes to each other by the first welding. The second electrode tab bundle 12a, 12b, and 12c may be formed in the same manner as the first electrode tab bundles 11a, 11b, and 11c. In this case, by the first welding, first welding regions PW2 may be formed at ends of the second electrode tab bundle 12a, 12b, and 12c of the negative electrodes.

Referring again to FIGS. 4 to 7, the first electrode tab bundles 11a, 11b, and 11c of the electrode assembly 500 may be arranged in a line, e.g., along the thickness direction (x-axis direction). That is, when viewed in the thickness direction (x-axis direction), the first electrode tab bundles 11a, 11b, and 11c may be arranged to overlap (e.g., be congruent) with each other. The first electrode tab bundles 11a, 11b, and 11c may all protrude from side ends (at the first/upper side) at the same position of the positive electrode 11. In this embodiment, since the second electrode tab bundles 12a, 12b, and 12c of the electrode assembly 500 have the same structure as the first electrode tab bundles 11a, 11b, and 11c, a detailed description thereof will be omitted.

Thereby, the ends of the first electrode tab bundles 11a, 11b, and 11c may be arranged in a line, e.g., along the thickness direction (x-axis direction) and coupled to the upper surface of the first current collector 310. The ends of the first electrode tab bundles 11a, 11b, and 11c may be bent and coupled to the upper surface of the first current collector 310. The first welding regions PW1 formed at the ends of the first electrode tab bundles 11a, 11b, and 11c may be positioned on the upper surface of the first current collector 310.

An upper side end of the first electrode tab bundle 11a and an upper side end of the first electrode tab bundle 11b may face each other and be positioned on the upper surface of the first branch 313 of the first current collector 310. Meanwhile, an upper side end of the first electrode tab bundle 11c may be positioned on the upper surface of the second branch 315 of the first current collector 310. Thereby, the first welding regions PW1 of the first electrode tab bundle 11a, the first electrode tab bundle 11b, and the first electrode tab bundle 11c may be arranged in a line and positioned on the first current collector 310.

In FIG. 5, the first electrode tab bundle 11a may be bent downward (e.g., downward as seen in the figure, i.e., in the positive X direction/horizontally in the reference frame of the battery) from the upper side (e.g., as seen in the figure, i.e., from the negative X side) of the electrode assembly 500 and coupled to the upper surface (in the reference frame of the battery/facing in the direction of view in the figure) of the first branch 313, while the first electrode tab bundle 11b may be bent upward (e.g., as seen in the figure, i.e., in the negative X direction/horizontally in the reference frame of the battery) from the lower side (e.g., as seen in the figure, i.e., from the positive X side) of the electrode assembly 500 and coupled to the upper surface (in the reference frame of the battery/facing in the direction of view in the figure) of the first branch 313. That is, the first electrode tab bundle 11a and the first electrode tab bundle 11b may be bent in directions facing each other (e.g., opposite to each other) and coupled to the upper surface of the first branch 313.

Meanwhile, the first electrode tab bundle 11c may be bent upward (e.g., upward as seen in the figure, i.e., in the negative X direction) from the lower side (e.g., as seen in the figure, i.e., from the positive X side) of the electrode assembly 500 and coupled to the upper surface (in the reference frame of the battery/facing in the direction of view in the figure) of the second branch 315, i.e., may be bent in the same direction as the first electrode tab bundle 11b. Alternatively, the first electrode tab bundle 11c may be bent downward (e.g., downward as seen in the figure, i.e., in the positive X direction) from the upper side (e.g., as seen in the figure, i.e., from the negative X side) of the electrode assembly 500 and coupled to the upper surface (in the reference frame of the battery/facing in the direction of view in the figure) of the second branch 315, i.e., may be bent in the same direction as the first electrode tab bundle 11a.

Therefore, in this embodiment, the first electrode tab bundle 11b and the first electrode tab bundle 11c may be bent upward from the lower side of the electrode assembly 500 (e.g., upward as seen in the figure, i.e., in the negative X direction), whereas the first electrode tab bundle 11a may be bent downward from the upper side of the electrode assembly 500 (e.g., downward as seen in the figure, i.e., in the positive X direction), in a direction opposite to those of the first electrode tab bundle 11b and the first electrode tab bundle 11c.

In this embodiment, the end of the first electrode tab bundle 11a may be coupled onto the first branch 313 by second welding (e.g., a second weld). Specifically, after the end of the first electrode tab bundle 11a is bent and brought into close contact with the upper surface of the first branch 313, the second welding is performed on the end (e.g., the distal end) of the first electrode tab bundle 11a such that the end of the first electrode tab bundle 11a may be coupled onto the first branch 313. By the second welding, a second welding region MW1 may be formed at the end of the first electrode tab bundle 11a (e.g., the second weld may form or extend over a second welding region MW1).

The second welding may be performed on an upper-side portion of the first weld (e.g., the first welding region PW1) of the first electrode tab bundle 11a so that the end of the first electrode tab bundle 11a is coupled to an upper surface of the first current collector 310. The second welding may be formed to extend long along an extension direction of the first branch 313, that is, along the width direction (y-axis direction). The second welding may have various shapes, such as a linear shape, a spiral shape, or a dot shape.

The second welding may for example be welding for fixing the end of the first electrode tab bundle 11a to the upper surface of the first current collector 310. The second welding may correspond to main welding (MW) that fixedly couples the first electrode tab bundle 11a onto the first current collector 310. For example, laser welding, ultrasonic welding, or the like may be applied as the second welding. Preferably, the laser welding may be applied as the second welding.

Specifically, in this embodiment, a second welding region MW1 formed at the end of the first electrode tab bundle 11a by the second welding/the second weld may at least partially overlap with the first welding region PW1 formed at the end of the first electrode tab bundle 11a (by the first welding/first weld), e.g., along the height direction (direction of view in FIG. 5). Preferably, an entirety of the second welding region MW1 may overlap with the first welding region PW1. That is, the entire second welding region MW1 may be located (e.g., be contained or encompassed) within the first welding region PW1, e.g., as illustrated in FIG. 5.

As illustrated in FIG. 5, an area of the first weld (e.g., of the first welding region PW1) may be formed to be larger than an area of the second weld (e.g., of the second welding region MW1). That is, a welding region formed by the first welding/weld may have a larger area than a welding region formed by the second welding/weld.

In this embodiment, the area of the first welding region PW1 may be 1.1 to 5 times the area of the second welding region MW1. Since the ends of the first electrode tab bundle 11a are coupled to each other by the first welding before the second welding is performed, the ends of the first electrode tab bundle 11a may be firmly coupled to the upper surface of the first current collector 310 even when the area of the second welding region MW1 is smaller than the area of the first welding region PW1. That is, because the ends of the first electrode tab bundle 11a are firmly fixed in advance by the first welding, even when only a portion of the ends of the first electrode tab bundle 11a is fixed onto the first current collector 310 by the second welding, the ends of the first electrode tab bundle 11a may be firmly fixed to the upper surface of the first current collector 310.

Meanwhile, a length IT1 of the first weld (e.g., of the first welding region PW1) in the extension and/or width direction (y-axis direction) may be greater than a length M1 of the second weld (e.g., of the second welding region MW1), for example at least 5% greater, in some examples at least 10% greater and in some examples at least 20% greater. Additionally or alternatively, a thickness W1 of the first weld (e.g., of the first welding region PW1) perpendicular to the extension direction/in the thickness direction (x-axis direction) may be greater than a thickness W2 of the second weld (e.g., of the second welding region MW1) , for example at least 5% greater, in some examples at least 10% greater and in some examples at least 20% greater. Thereby, as described above, an area of the first welding region PW1 may be formed to be larger than an area of the second welding region MW1.

Referring to FIG. 7, the ends (e.g., the distal ends) of the first electrode tab bundles 11a, 11b, and 11c are bent and fixed to the upper surface of the first current collector 310. Portions other than the ends of the first electrode tab bundles 11a, 11b, and 11c (e.g., proximal portions adjacent to the respective electrode assembly 510, 530, 550) may be maintained in a state bent toward the upper surface of the electrode assembly 500 by insulating tapes T1, T2, and T3. In this case, the insulating tapes T1, T2, and T3 may be positioned between the current collector 300 and the upper surface (first side/surface) of the electrode assembly 500.

A portion (e.g., a proximal portion below the branch 313) of the first electrode tab bundle 11a adjacent to the upper surface of the first electrode assembly 510 may be bent toward the upper surface of the first electrode assembly 510 and, optionally, fixed by the insulating tape T1. A portion (e.g., a proximal portion below the branch 313) of the first electrode tab bundle 11b adjacent to the upper surface of the second electrode assembly 530 may be bent toward the upper surface of the second electrode assembly 530 and, optionally, fixed by the insulating tape T2. A portion (e.g., a proximal portion below the branch 315) of the first electrode tab bundle 11c adjacent to the upper surface of the third electrode assembly 550 may be bent toward the upper surface of the third electrode assembly 550 and, optionally, fixed by the insulating tape T3.

Hereinafter, a secondary battery according to a second embodiment of the present disclosure will be described.

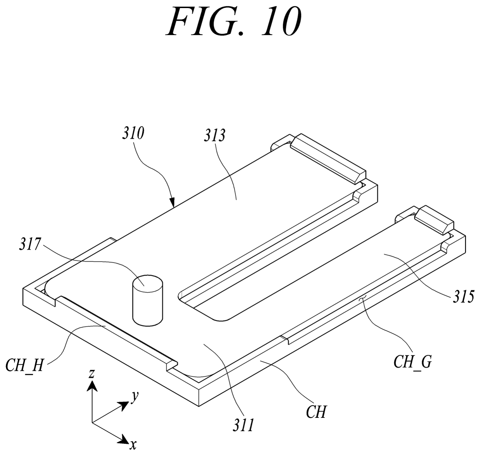

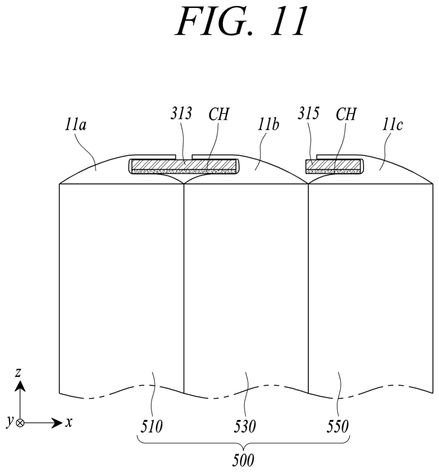

FIG. 10 is a perspective view illustrating a current collector according to a second embodiment of the present disclosure, and FIG. 11 is a cross-sectional view illustrating a state in which the current collector of FIG. 10 is coupled to the electrode assembly.

Referring to FIGS. 10 and 11, since the secondary battery according to the second embodiment has the same structure as the secondary battery according to the first embodiment described above except for an insulating holder CH, a redundant description of the same components will be omitted.

In this embodiment, the insulating holder CH may be disposed on a lower surface of the first current collector 310 (put differently, the first current collector 310 may be arranged in and/or on the insulating holder as illustrated in FIG. 10). The insulating holder CH may support and fix the first current collector 310, e.g., on the lower surface of the first current collector 310. In this embodiment, an (optional) insulating holder CH coupled to the lower surface of the second current collector 330 may have the same structure as the insulating holder CH of the first current collector 310, and thus a detailed description thereof will be omitted.

The insulating holder CH may prevent deformation or damage of the first current collector 310 during a welding process between the first electrode tab bundles 11a, 11b, and 11c and the first current collector 310, or while the first current collector 310 is positioned inside the casing 100.

When the first branch 313 and the second branch 315 of the first current collector 310 are deformed upwardly or downwardly, the first branch 313 and the second branch 315 may come into contact with the upper surface of the electrode assembly 500, thereby causing damage to the electrode assembly 500 or a short circuit. In addition, when the first branch 313 and the second branch 315 are deformed laterally, a distance between the first branch 313 and the second branch 315 may be changed, such that side portions of the first electrode tab bundles 11a, 11b, and 11c coupled to the upper surfaces of the first branch 313 and the second branch 315 may be damaged or cut. Therefore, in this embodiment, the insulating holder CH may support and fix the first current collector 310, thereby preventing damage to or a short circuit of the electrode assembly 500 or the first electrode tab bundles 11a, 11b, and 11c.

The insulating holder CH may have a shape corresponding to a shape of the first current collector 310. In this case, the insulating holder CH may accommodate the first current collector 310 therein (e.g., extend around, and optionally fully surround (e.g., enclose or encircle), an edge of the first current collector 310). The insulating holder CH may support the first current collector 310 while surrounding the lower and side surfaces of the accommodated first current collector 310. In order to prevent the first current collector 310 accommodated therein from being disengaged, a plurality of hooks CH_H may be disposed on side surfaces of the insulating holder CH. The first current collector 310 may be fixed inside the insulating holder CH by the plurality of hooks CH_H.

In order for the first electrode tab bundles 11a, 11b, and 11c to be bent and brought into contact with the upper surface of the first current collector 310, a cutout groove CH_G (as an example of a cutout) in which a portion of the side surface is cut away may be formed on the side surface of the insulating holder CH. When the first electrode tab bundles 11a, 11b, and 11c protruding from the electrode assembly 500 are bent and the bent first electrode tab bundles 11a, 11b, and 11c come into contact with the upper surface of the first current collector 310, the cutout groove CH_G may prevent the first electrode tab bundles 11a, 11b, and 11c from being interfered with by the side surface of the insulating holder CH.

Due to the cutout groove CH_G, a portion of the side surface of the first current collector 310 accommodated in the insulating holder CH may be exposed. In addition, due to the cutout groove CH_G, a contact area between the first current collector 310 and the first electrode tab bundles 11a, 11b, and 11c may be increased.

Hereinafter, a secondary battery according to a third embodiment of the present disclosure will be described.

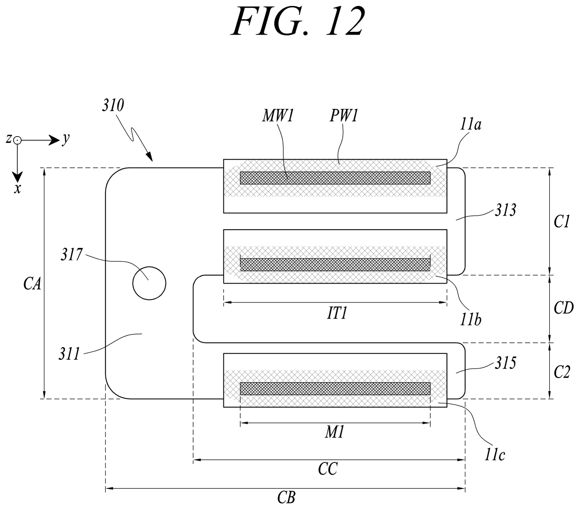

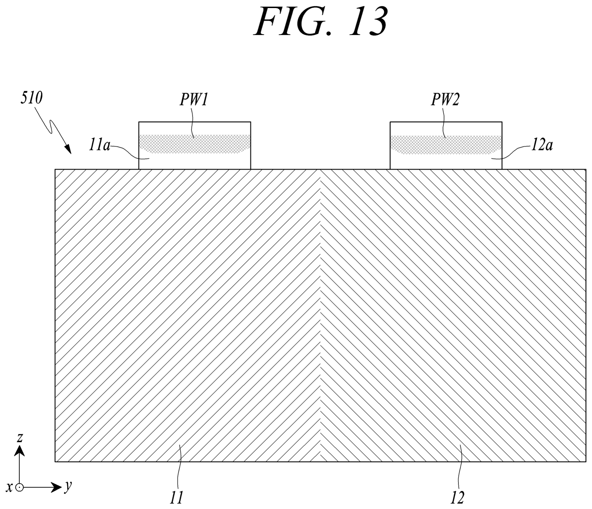

FIG. 12 is a plan view illustrating a state in which the electrode tab bundle is coupled to the current collector according to a third embodiment of the present disclosure, and FIG. 13 is a side view illustrating an electrode in which the electrode tab bundle is formed according to the third embodiment of the present disclosure

Referring to FIGS. 12 and 13, since a secondary battery according to the third embodiment has the same structure as the secondary battery according to the first embodiment described above except for the first electrode tab bundles 11a, 11b, and 11c, a redundant description of the same components will be omitted.

In this embodiment, the first weld (e.g., the first welding region PW1) may be formed at a position spaced apart from an upper side end (distal end/distal portion) of each of the first electrode tab bundles 11a, 11b, and 11c. In the above-described first embodiment, the first welding region PW1 is formed at the upper side end (distal end) of each of the first electrode tab bundles 11a, 11b, and 11c, e.g., such that only the first welding region PW1 is located at the side end of each of the first electrode tab bundles 11a, 11b, and 11c.

The first welding region PW1 may for example be positioned at a location spaced apart from the upper side end (distal end) of each first electrode tab bundle 11a, 11b, or 11c, e.g., such that only an uncoated portion that is not welded is located at the side end (distal end). That is, only the uncoated portion that is not welded is positioned between the upper side end of each first electrode tab bundle 11a, 11b, or 11c and the first welding region PW1.

The first weld (e.g., the first welding region PW1) may for example be formed in an intermediate portion of the respective electrode tab bundle 11a, 11b, or 11c (e.g., arranged between a proximal portion and a distal end of the respective electrode tab bundle 11a, 11b, or 11c), for example in an intermediate portion arranged on a portion of the upper (or lower) surface of the respective branch 313, 315 at (e.g., abutting or adjacent to) a side surface (e.g., an edge) of the respective branch 313, 315, e.g., as illustrated in FIG. 12.

As illustrated in FIG. 12, not only the first welding region PW1 but also the uncoated (and, e.g., unwelded) portion of the first electrode tab bundle 11a and the uncoated (and, e.g., unwelded) portion of the first electrode tab bundle 11b may be positioned on the upper surface of the first branch 313 of the first current collector 310. In addition, on the upper surface of the first branch 313, the uncoated (and, e.g., unwelded) portions of the first electrode tab bundle 11a and the first electrode tab bundle 11b may be arranged side by side. An uncoated (and, e.g., unwelded) portion of the first electrode tab bundle 11c and the first welding region PW1 may be positioned on the upper surface of the second branch 315.

As the thickness of the electrode assembly 500 increases, the length of the uncoated portions increases to form the first electrode tab bundles 11a, 11b, and 11c. In order to maintain a constant distance between the upper surface of the electrode assembly 500 and the current collector 300, as the length of the uncoated portion increases, the first welding region PW1 may be spaced apart from the upper side end (distal end) of the first electrode tab bundle 11a, 11b, or 11c.

Hereinafter, a secondary battery according to a fourth embodiment of the present disclosure will be described.

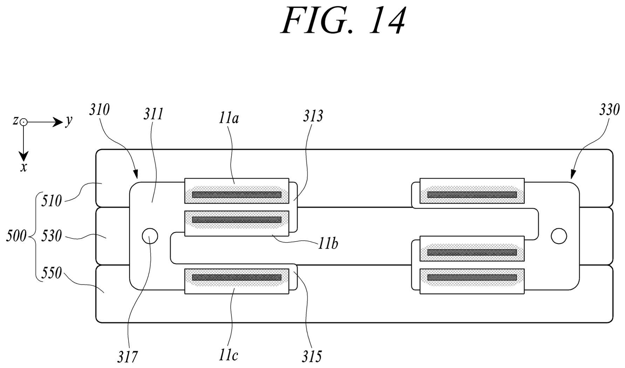

FIG. 14 is a plan view illustrating a state in which the current collector is coupled to the plurality of electrode assemblies according to a fourth embodiment of the present disclosure.

Referring to FIG. 14, since the secondary battery according to the fourth embodiment has the same structure as the secondary battery according to the first embodiment described above except for the current collector 300, a redundant description of the same components will be omitted.

In this embodiment, the first current collector 310 and the second current collector 330 may be arranged symmetrically with respect to a virtual center point of the upper surface of the electrode assembly 500, e.g., in a point-symmetric arrangement.

In the above-described first embodiment, the first current collector 310 and the second current collector 330 may be arranged symmetrically with respect to an axis parallel to the thickness direction (x-axis direction), e.g., in a mirror-symmetric arrangement. In this embodiment, unlike the above, the first current collector 310 and the second current collector 330 may be arranged in point symmetry with respect to the virtual center point of the upper surface of the electrode assembly 500.

That is, when the first current collector 310 is rotated by 180 degrees, it may overlap the second current collector 330. Alternatively, when the second current collector 330 is rotated by 180 degrees, it may overlap the first current collector 310.

Hereinafter, a secondary battery according to a fifth embodiment of the present disclosure will be described.

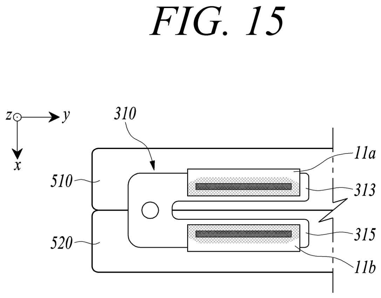

FIG. 15 is a partial plan view illustrating a state in which a current collector is coupled to a plurality of electrode assemblies according to a fifth embodiment of the present disclosure.

Referring to FIG. 15, the secondary battery according to the fifth embodiment has the same structure as the secondary battery according to the first embodiment described above except for the current collector 300 and the electrode assembly 500, and thus a redundant description of the same components will be omitted. Further, since the second current collector 330 has the same structure as the first current collector 310, a detailed description thereof will be omitted.

In this embodiment, the electrode assembly 500 may include (e.g., consist of) two electrode assemblies, namely, a first electrode assembly 510 and a second electrode assembly 520.

The first branch 313 and the second branch 315 of the first current collector 310 may have the same number of first electrode tab bundles 11a and 11b coupled thereto. That is, one first electrode tab bundle may be coupled to each of the first branch 313 and the second branch 315. The first electrode tab bundle 11a may be coupled to the upper surface of the first branch 313, and the first electrode tab bundle 11b may be coupled to the upper surface of the second branch 315.

In this case, the first branch 313 and the second branch 315 may have the same width. Thereby, an area of the first electrode tab bundle 11a coupled to the upper surface of the first branch 313 and an area of the first electrode tab bundle 11b coupled to the upper surface of the second branch 315 may be the same. Therefore, the branches of the first current collector 310 may be disposed to be symmetrical (e.g., mirror-symmetrical) with respect to an axis parallel to the extension and/or width direction (y-axis direction).

In FIG. 15, the first electrode tab bundle 11a may be bent downward (e.g., downward as seen in the figure) from the upper side (e.g., as seen in the figure) of the electrode assembly 500 and coupled to the upper surface (e.g., in the reference frame of the battery) of the first branch 313, and the first electrode tab bundle 11b may be bent upward (e.g., upward as seen in the figure) from the lower side (e.g., as seen in the figure) of the electrode assembly 500 and coupled to the upper surface of the second branch 315 (e.g., in the reference frame of the battery). That is, the first electrode tab bundle 11a and the first electrode tab bundle 11b may be bent in directions facing each other and coupled to the upper surfaces of the first branch 313 and the second branch 315.

Hereinafter, a secondary battery according to a sixth embodiment of the present disclosure will be described.

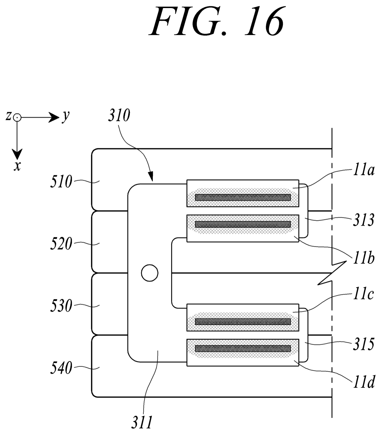

FIG. 16 is a partial plan view illustrating a state in which a current collector is coupled to a plurality of electrode assemblies according to a sixth embodiment of the present disclosure.

Referring to FIG. 16, the secondary battery according to the sixth embodiment has the same structure as the secondary battery according to the first embodiment described above except for the current collector 300 and the electrode assembly 500, and thus a redundant description of the same components will be omitted. In addition, since the second current collector 330 has the same structure as the first current collector 310, a detailed description thereof will be omitted.

In this embodiment, the electrode assembly 500 may include (e.g., consist of) a first electrode assembly 510, a second electrode assembly 520, a third electrode assembly 530, and a fourth electrode assembly 540, that is, four electrode assemblies 500. The four electrode assemblies may be stacked and arranged parallel to each other.

The first branch 313 and the second branch 315 of the first current collector 310 may have the same number of first electrode tab bundles 11a, 11b, 11c, and 11d coupled thereto. Two first electrode tab bundles 11a and 11b may be coupled to the first branch 313, and two first electrode tab bundles 11c and 11d may be coupled to the second branch 315.

On the upper surface of the first branch 313, the first electrode tab bundle 11a may be bent downward (e.g., downward as seen in the figure/in the positive X direction/horizontally in the reference frame of the battery) from the upper side (e.g., as seen in the figure/from the negative X side) and coupled to the upper surface (e.g., in the reference frame of the battery) of the first branch 313, and the first electrode tab bundle 11b may be bent upward (e.g., upward as seen in the figure/in the negative X direction/horizontally in the reference frame of the battery) from the lower side (e.g., as seen in the figure/from the positive X side) of the electrode assembly 500 and coupled to the upper surface (e.g., in the reference frame of the battery) of the first branch 313. That is, the first electrode tab bundle 11a and the first electrode tab bundle 11b may be bent in directions facing each other and coupled to the upper surface of the first branch 313.

On an upper surface of the second branch 315, the first electrode tab bundle 11c may be bent downward (e.g., downward as seen in the figure/in the positive X direction/horizontally in the reference frame of the battery) from the upper side and coupled to the upper surface of the second branch 315, and the first electrode tab bundle 11d may be bent upward (e.g., upward as seen in the figure/in the negative X direction/horizontally in the reference frame of the battery) from the lower side and coupled to the upper surface of the second branch 315. That is, the first electrode tab bundle 11c and the first electrode tab bundle 11d may be bent in directions facing each other and coupled to the upper surface of the second branch 315.

In addition, the first electrode tab bundles 11a, 11b, 11c, and 11d may be arranged in a line, e.g., along the thickness direction (x-axis direction). That is, when viewed in the thickness direction (x-axis direction), the first electrode tab bundles 11a, 11b, 11c, and 11d may be arranged to overlap (e.g., be congruent) with each other.

In this case, the first branch 313 and the second branch 315 may have the same width. Thereby, an area of the first electrode tab bundles 11a and 11b coupled to the upper surface of the first branch 313 and an area of the first electrode tab bundles 11c and 11d coupled to the upper surface of the second branch 315 may be the same. Therefore, the first current collector 310 may be arranged to be symmetrical (e.g., mirror-symmetrical) with respect to an axis parallel to the width direction (y-axis direction).

Hereinafter, a secondary battery according to a seventh embodiment of the present disclosure will be described.

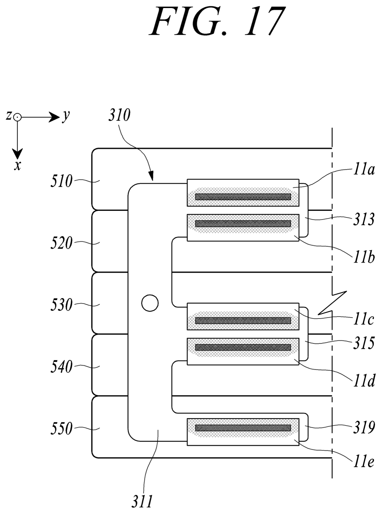

FIG. 17 is a partial plan view illustrating a state in which a current collector is coupled to a plurality of electrode assemblies according to a seventh embodiment of the present disclosure.

Referring to FIG. 17, the secondary battery according to the seventh embodiment has the same structure as the secondary battery according to the sixth embodiment described above except for the current collector 300 and the electrode assembly 500, and thus a redundant description of the same components will be omitted. In addition, since the second current collector 330 has the same structure as the first current collector 310, a detailed description thereof will be omitted.

In this embodiment, the electrode assembly 500 may include (e.g., consist of) a first electrode assembly 510, a second electrode assembly 520, a third electrode assembly 530, a fourth electrode assembly 540, and a fifth electrode assembly 550, that is, five electrode assemblies 500. The five electrode assemblies may be stacked and arranged parallel to each other.

The first current collector 310 may include a first branch 313, a second branch 315, and a third branch 319. Widths of the first branch 313 and the second branch 315 may be the same as each other, and the third branch 319 may be formed to have a smaller width than the first branch 313 and the second branch 315.

Two first electrode tab bundles may be coupled to each of the first branch 313 and the second branch 315, and one first electrode tab bundle may be coupled to the third branch 319. The first electrode tab bundles 11a and 11b may be coupled to the upper surface of the first branch 313, and the first electrode tab bundles 11c and 11d may be coupled to the upper surface of the second branch 315. A first electrode tab bundle 11e may be coupled to an upper surface of the third branch 319.

On an upper surface of the first branch 313, the first electrode tab bundle 11a may be bent downward (e.g., downward as seen in the figure/in the positive X direction/horizontally in the reference frame of the battery) from the upper side and coupled to the upper surface of the first branch 313, and the first electrode tab bundle 11b may be bent upward (e.g., upward as seen in the figure/in the negative X direction/horizontally in the reference frame of the battery) from the lower side of the electrode assembly 500 and coupled to the upper surface of the first branch 313. That is, the first electrode tab bundle 11a and the first electrode tab bundle 11b may be bent in directions facing each other and coupled to the upper surface of the first branch 313.

On an upper surface of the second branch 315, the first electrode tab bundle 11c may be bent downward (e.g., downward as seen in the figure/in the positive X direction/horizontally in the reference frame of the battery) from the upper side and coupled to the upper surface of the second branch 315, and the first electrode tab bundle 11d may be bent upward (e.g., upward as seen in the figure/in the negative X direction/horizontally in the reference frame of the battery) from the lower side and coupled to the upper surface of the second branch 315. That is, the first electrode tab bundle 11c and the first electrode tab bundle 11d may be bent in directions facing each other and coupled to the upper surface of the second branch 315.

On an upper surface of the third branch 319, the first electrode tab bundle 11e may be bent upward (e.g., upward as seen in the figure/in the negative X direction/horizontally in the reference frame of the battery) from the lower side and coupled to the upper surface of the third branch 319. However, the first electrode tab bundle 11e may be bent downward from the upper side and coupled to the upper surface of the third branch 319, without being limited thereto.

In addition, the first electrode tab bundles 11a, 11b, 11c, 11d, and 11e may be arranged in a line, e.g., along the thickness direction (x-axis direction). That is, when viewed in the thickness direction (x-axis direction), the first electrode tab bundles 11a, 11b, 11c, 11d, and 11e may be arranged to overlap (e.g., be congruent) with each other.

Hereinafter, a secondary battery according to an eighth embodiment of the present disclosure will be described.

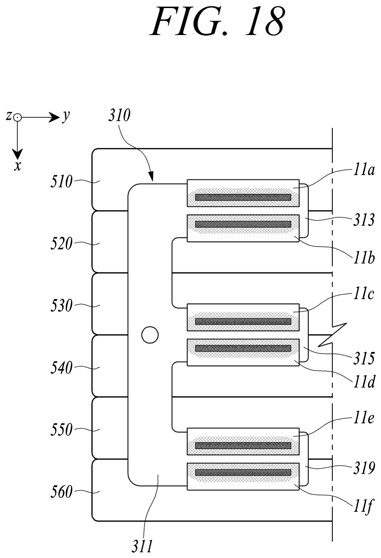

FIG. 18 is a partial plan view illustrating a state in which a current collector is coupled to a plurality of electrode assemblies according to the eighth embodiment of the present disclosure.

Referring to FIG. 18, the secondary battery according to the eighth embodiment has the same structure as the secondary battery according to the seventh embodiment described above except for the current collector 300 and the electrode assembly 500, and thus a redundant description of the same components will be omitted. In addition, since the second current collector 330 has the same structure as the first current collector 310, a detailed description thereof will be omitted.

In this embodiment, the electrode assembly 500 may include (e.g., consist of) a first electrode assembly 510, a second electrode assembly 520, a third electrode assembly 530, a fourth electrode assembly 540, a fifth electrode assembly 550, and a sixth electrode assembly 560, that is, six electrode assemblies 500. The six electrode assemblies may be stacked and arranged parallel to each other.

A first branch 313, a second branch 315, and a third branch 319 of the first current collector 310 may have the same number of first electrode tab bundles 11a, 11b, 11c, 11d, 11e, and 11f coupled thereto. Two first electrode tab bundles may be coupled to each of the first branch 313 to the third branch 319.

The first electrode tab bundles 11e and 11f may be coupled to an upper surface of the third branch 319. The first electrode tab bundle 11e may be bent downward (e.g., downward as seen in the figure/in the positive X direction/horizontally in the reference frame of the battery) from an upper side and coupled to the upper surface of the third branch 319, and the first electrode tab bundle 11f may be bent upward (e.g., upward as seen in the figure/in the negative X direction/horizontally in the reference frame of the battery) from a lower side and coupled to the upper surface of the third branch 319.

In this case, the first branch 313, the second branch 315, and the third branch 319 may have the same width. Thereby, an area of the first electrode tab bundles 11a and 11b coupled to the upper surface of the first branch 313, an area of the first electrode tab bundles 11c and 11d coupled to the upper surface of the second branch 315, and an area of the first electrode tab bundles 11e and 11f coupled to the upper surface of the third branch 319 may be the same. Therefore, the branches of the first current collector 310 may be arranged to be symmetrical (e.g., mirror-symmetrical) with respect to an axis parallel to the extension and/or width direction (y-axis direction).

Hereinafter, a secondary battery according to a ninth embodiment of the present disclosure will be described.

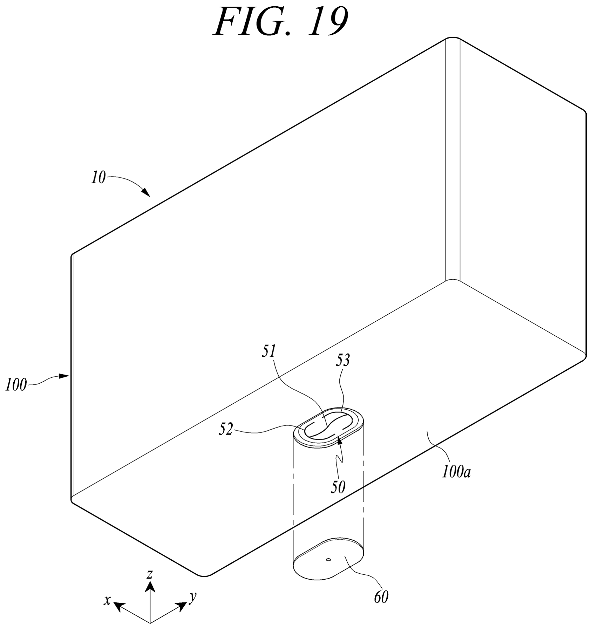

FIG. 19 is a perspective view illustrating a vent portion according to the ninth embodiment of the present disclosure, as viewed from below.

Referring to FIG. 19, the secondary battery according to the ninth embodiment has the same structure as the secondary battery according to the first embodiment described above except for the vent portion 50, and thus a redundant description of the same components will be omitted.

In this embodiment, the secondary battery 10 may be a prismatic battery having a substantially rectangular parallelepiped-shaped casing 100, and the vent portion 50 may be fixed to a bottom 100a of the casing 100. The bottom 100a of the casing 100 may be formed integrally with the casing 100 or may be fixed to the casing 100 by welding or the like.

An exhaust hole for discharging gas may be formed in the bottom 100a of the casing 100. The vent portion 50 may be inserted into a lower outer side of the exhaust hole. A vent protection film 60 may be disposed on a lower outer side of the vent portion 50.

The vent portion 50 may be formed in a plate shape. The vent portion 50 may be fixed to the casing 100 by welding. The vent portion 50 may extend long in the width direction (y-axis direction) of the bottom of the casing.

The vent portion 50 may include two side notches 52 and 53 and a connection notch 51 connecting the side notches 52 and 53. Since the connection notch 51 and the side notches 52 and 53 have the same structure as the connection notch and the side notches according to the above-described first embodiment, a redundant description thereof will be omitted.

Meanwhile, the vent protection film 60 may be installed at a lower portion of the vent portion 50. The vent protection film 60 may be formed of a flexible film, and a connection hole for discharging pressure may be formed in the vent protection film 60.

As described above, according to the ninth embodiment, since the vent portion 50 is formed at the bottom 100a of the casing 100, an electrolyte may also be discharged together when the vent portion 50 is opened.

Hereinafter, a secondary battery according to a tenth embodiment of the present disclosure will be described.

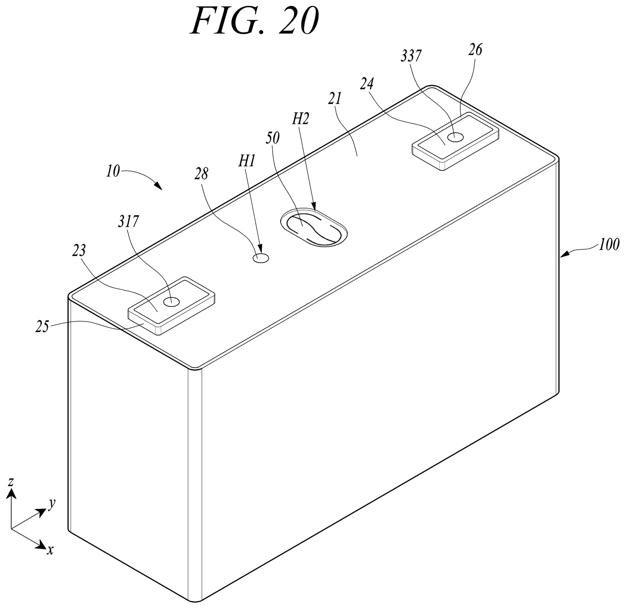

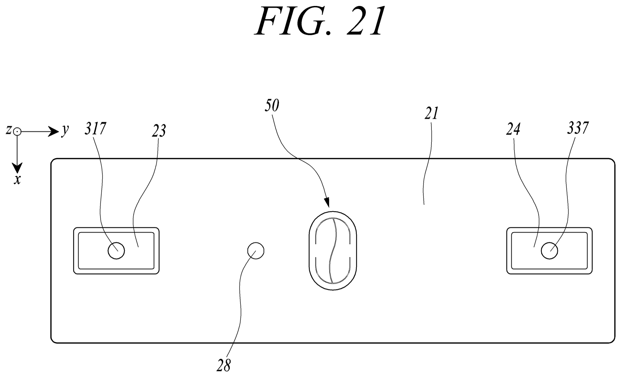

FIG. 20 is a perspective view illustrating the secondary battery according to the tenth embodiment of the present disclosure, and FIG. 21 is a plan view illustrating the secondary battery of FIG. 20 as viewed from above.

Referring to FIGS. 20 and 21, the secondary battery according to the tenth embodiment has the same structure as the secondary battery according to the first embodiment described above except for the vent portion 50, and thus a redundant description of the same components will be omitted.

In this embodiment, the vent portion 50 may extend long in the thickness direction (x-axis direction). The vent portion 50 may have a shape elongated in the thickness direction (x-axis direction), such as a rectangular shape, an oblong shape, or a rounded-rectangle shape. In the above-described first embodiment, the vent portion 50 is formed to extend long in the width direction (y-axis direction), whereas in this embodiment, the vent portion 50 is formed to extend long in the thickness direction (x-axis direction), which intersects the direction of the vent portion 50 of the first embodiment.

The vent portion 50 may be fixed to the cap plate 21 by welding. The vent portion 50 may be fixed to a lower surface of the cap plate 21, or may alternatively be fixed to an upper surface of the cap plate 21.

In this embodiment, as the plurality of electrode assemblies 500 are stacked and the thickness of the cap plate 21 increases in a direction parallel to the thickness direction (x-axis direction), the vent portion 50 may be disposed in the thickness direction (x-axis direction). Thereby, during gas discharge, the vent portion 50 is not interfered with by the first current collector 310 and the second current collector 330 positioned below, and thus the vent portion 50 may smoothly discharge gas.

Hereinafter, a secondary battery according to an eleventh embodiment of the present disclosure will be described.

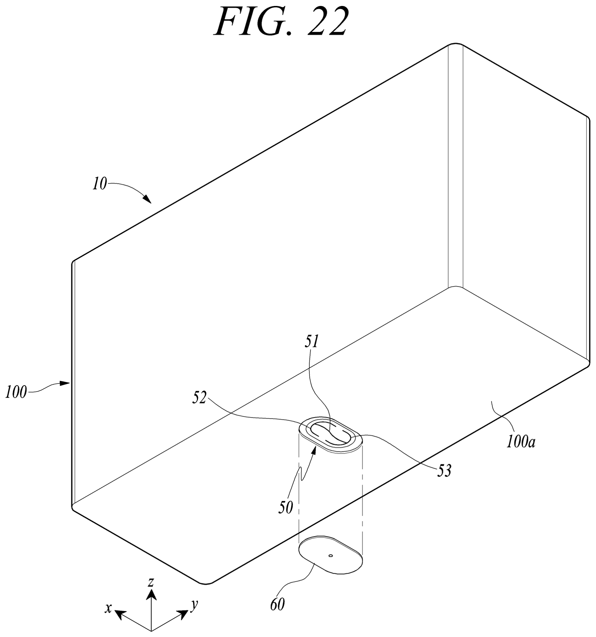

FIG. 22 is a perspective view illustrating a vent portion according to the eleventh embodiment of the present disclosure, as viewed from below.

Referring to FIG. 22, the secondary battery according to the eleventh embodiment has the same structure as the secondary battery according to the tenth embodiment described above except for the vent portion 50, and thus a redundant description of the same components will be omitted.

In this embodiment, the secondary battery 10 may be a prismatic battery having a substantially rectangular parallelepiped-shaped casing 100, and the vent portion 50 may be fixed to a bottom 100a of the casing 100. The bottom 100a of the casing 100 may be formed integrally with the casing 100 or may be fixed to the casing 100 by welding or the like.

An exhaust hole for discharging gas may be formed in the bottom 100a of the casing 100. The vent portion 50 may be inserted into a lower outer side of the exhaust hole. A vent protection film 60 may be disposed on a lower outer side of the vent portion 50.

The vent portion 50 may be formed in a plate shape and may be fixed to the casing 100 by welding.

The vent portion 50 may extend long in the thickness direction (x-axis direction). The vent portion 50 may have a shape elongated in the thickness direction (x-axis direction), such as a rectangular shape, an oblong shape, or a rounded-rectangle shape.

Meanwhile, a vent protection film 60 may be installed below the vent portion 50. The vent protection film 60 may be formed of a flexible film, and a connection hole for discharging pressure may be formed in the vent protection film 60.

As described above, according to the eleventh embodiment, since the vent portion 50 is formed at the bottom 100a of the casing 100, an electrolyte may also be discharged together when the vent portion 50 is opened.

According to one embodiment of the present disclosure, a secondary battery can increase energy density per unit volume by reducing a space occupied by a thin film tab and the like within a casing.

Further, according to one embodiment of the present disclosure, the secondary battery can reduce resistance to current caused by an increase in a length of a thin film tab in a process in which current is delivered to an electrode assembly through an external terminal.

Furthermore, according to one embodiment of the present disclosure, the secondary battery can stably connect a thin film tab to a current collector as the number of electrode assemblies increases.

In view of the above, it will be appreciated that the present disclosure also provides the itemized embodiments listed below. In addition or instead of the features listed below, these itemized embodiments may also comprise any feature or combination of features described above for the secondary battery according to the present disclosure.

Embodiment 1. A secondary battery, comprising:
a casing;
a plurality of electrode assemblies accommodated in the casing, each electrode assembly including an electrode;
electrode tab bundles formed on the electrodes of the plurality of electrode assemblies, respectively;
a current collector coupled to the electrode tab bundles of the plurality of electrode assemblies; and
a cap assembly sealing the casing and having an external terminal connected to the current collector,
wherein the current collector comprises:
   a main support plate on which a connection terminal connected to the external terminal is positioned; and
   a plurality of branches extending from a side surface of the main support plate along a width direction of the electrode assemblies, the electrode tab bundles being coupled thereto.

Embodiment 2. The secondary battery according to embodiment 1, wherein ends of the electrode tab bundles are fixedly coupled to each other by first welding.

Embodiment 3. The secondary battery according to embodiment 1 or 2, wherein the ends of the electrode tab bundles are fixed on the plurality of branches by second welding.

Embodiment 4. The secondary battery according to embodiment 3, wherein a second welding region formed at the ends by the second welding at least partially overlaps a first welding region formed at the ends by the first welding.

Embodiment 5. The secondary battery according to embodiment 4, wherein the second welding region is located within the first welding region.

Embodiment 6. The secondary battery according to any one of embodiments 3 to 5, wherein an area of the first welding region formed at the ends by the first welding is 1.1 to 5 times an area of the second welding region formed at the ends by the second welding.

Embodiment 7. The secondary battery according to any one of embodiments 3 to 6, wherein a length of the first welding region in the width direction is greater than a length of the second welding region.

Embodiment 8. The secondary battery according to any one of embodiments 1 to 7, wherein the plurality of branches comprise a first branch and a second branch that are spaced apart from each other in a thickness direction of the electrode assembly intersecting the width direction.

Embodiment 9. The secondary battery according to embodiment 8, wherein different numbers of the electrode tab bundles are coupled to the first branch and the second branch.

Embodiment 10. The secondary battery according to embodiment 9, wherein two electrode tab bundles are coupled to the first branch, and one electrode tab bundles is coupled to the second branch.

Embodiment 11. The secondary battery according to embodiment 10, wherein the two electrode tab bundles and the one electrode tab bundle are arranged in a line along the thickness direction.

Embodiment 12. The secondary battery according to embodiment 10 or 11, wherein:
the two electrode tab bundles are bent to face each other along the thickness direction and coupled onto the first branch, and
the one electrode tab bundle is bent in the same direction as an adjacent one of the two electrode tab bundles and coupled onto the second branch.

Embodiment 13. The secondary battery according to any one of embodiments 1 to 12, wherein:
the plurality of electrode assemblies comprise three electrode assemblies arranged in parallel along the thickness direction, and
one electrode tab bundle is disposed on each of the three electrode assemblies.

Embodiment 14. The secondary battery according to any one of embodiments 8 to 13, wherein a first width of the first branch in the thickness direction is greater than a second width of the second branch.

Embodiment 15. The secondary battery according to embodiment 14, wherein the first width of the first branch and the second width of the second branch satisfy Equation 1 below. $1 / 3 * C 1 \leq C 2 \leq 1 / 1.5 * C 1$ where C1 represents the first width, and C2 represents the second width.

Embodiment 16. The secondary battery according to any one of embodiments 8 to 15, wherein a first area of the first branch and a second area of the second branch satisfy Equation 2 below. $1 / 3 * S 1 \leq S 2 \leq 1 / 1.5 * S 1$ where S1 represents the first area, and S2 represents the second area.

Embodiment 17. The secondary battery according to any one of embodiments 8 to 16, wherein a separation distance between the first branch and the second branch satisfies Equation 3 below. $1 / 2 * C 2 \leq CD \leq C 1$ where C1 represents the first width, C2 represents the second width, and CD represents the separation distance between the first branch and the second branch.

Embodiment 18. The secondary battery according to any one of embodiments 8 to 17, wherein the electrode tab bundles are coupled to upper surfaces of the first branch and the second branch.

Embodiment 19. The secondary battery according to embodiment 8 or any one of embodiments 13 to 18, wherein the same number of electrode tab bundles are coupled to the first branch and the second branch.

Embodiment 20. The secondary battery according to any one of embodiments 1 to 19, wherein the connection terminal is disposed adjacent to a side end of the electrode assembly in the width direction.

Embodiment 21. The secondary battery according to any one of embodiments 1 to 20, wherein the connection terminal has a cylindrical shape.

Embodiment 22. The secondary battery according to any one of embodiments 1 to 21, wherein the main support plate and the plurality of branches lie in the same plane.

Embodiment 23. The secondary battery according to embodiment 22, wherein a flatness of the main support plate and the plurality of branches is 0.05 to 2.

Embodiment 24. The secondary battery according to any one of embodiments 1 to 23, wherein an overall length of the current collector in the width direction is 0.5 to 0.75 times a length of the electrode assembly.

Embodiment 25. The secondary battery according to any one of embodiments 1 to 24, wherein an insulating holder supporting the current collector is coupled to a lower portion of the current collector.

Embodiment 26. The secondary battery according to any one of embodiments 1 to 25, wherein:
at least a portion of the electrode tab bundle is bent to be parallel to an upper surface of the electrode assembly by an insulating tape, and
the insulating tape is disposed between the current collector and the upper surface of the electrode assembly.

Embodiment 27. The secondary battery according to any one of embodiments 1 to 26,
further comprising a vent portion formed in the casing or the cap assembly,
wherein a longitudinal axis direction of the vent portion is parallel to the width direction or intersects the width direction.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims.

## Claims

1. A secondary battery (10), comprising:
a casing (100);
a plurality of electrode assemblies (500-560) accommodated in the casing (100), each electrode assembly (500-560) including an electrode (11, 12) and an electrode tab bundle (11a-f, 12a-c) formed on the electrode (11, 12) at a first side of the plurality of electrode assemblies (500-560);
a current collector (310, 330) coupled to the electrode tab bundles (11a-f, 12a-c) of the plurality of electrode assemblies (500-560); and
a cap sealing the casing (100) and having an external terminal (23, 24) connected to the current collector (310, 330),
wherein the current collector (310, 330) comprises:
a connecting portion (311, 331) on which a connection terminal (317, 337) connected to the external terminal (23, 24) is positioned; and
a plurality of branches (313, 315, 319, 333, 335) extending from the connecting portion (311, 331) along the first side of the plurality of electrode assemblies (500-560), the electrode tab bundles (11a-f, 12a-c) being coupled to the plurality of branches (313, 315, 319, 333, 335).

2. The secondary battery (10) according to claim 1, wherein:
for some or all of the electrode tab bundles (11a-f, 12a-c), electrode tabs within the respective electrode tab bundle (11a-f, 12a-c) are coupled to each other by a first weld (PW1); and/or
the electrode tab bundles (11a-f, 12a-c) are coupled to the plurality of branches (313, 315, 319, 333, 335) by a second weld (MW1).

3. The secondary battery (10) according to claim 2, wherein, for some or all of the electrode tab bundles (11a-f, 12a-c), the second weld (MW1) at least partially overlaps the first weld (PW1), in particular wherein the second weld (MW1) is located within the first weld (PW1).

4. The secondary battery (10) according to claim 2 or 3, wherein:
for some or all of the electrode tab bundles (11a-f, 12a-c), an area of the first weld (PW1) is 1.1 to 5 times an area of the second weld (MW1); and/or
for some or all of the electrode tab bundles (11a-f, 12a-c), a length (IT1) of the first weld (PW1) is greater than a length (M1) of the second weld (MW1), the lengths (IT1, M1) of the first and second welds (PW, MW1) being measured in an extension direction (Y) along which the plurality of branches (313, 315, 319, 333, 335) extend from the connecting portion (311, 331).

5. The secondary battery (10) according to any one of the preceding claims, wherein the electrode tab bundles (11a-f, 12a-c) of the electrode assemblies (500-560) are arranged in a line along a direction (X) intersecting the extension direction (Y) along which the plurality of branches (313, 315, 319, 333, 335) extend from the connecting portion (311, 331).

6. The secondary battery (10) according to any one of the preceding claims, wherein:
the plurality of electrode assemblies (500-560) comprise three electrode assemblies (510, 520, 530) arranged in parallel, and
at least one electrode tab bundle (11a-c, 12a-c) coupled to the current collector (310, 330) is disposed on each of the three electrode assemblies (510, 520, 530).

7. The secondary battery (10) according to any one of the preceding claims, wherein the plurality of branches (313, 315, 319, 333, 335) comprise a first branch (313, 333) and a second branch (315, 335) that are spaced apart from each other in a direction intersecting the extension direction (Y) along which the plurality of branches (313, 315, 319, 333, 335) extend from the connecting portion (311, 331).

8. The secondary battery (10) according to claim 7, wherein different numbers of the electrode tab bundles (11a-f, 12a-c) are coupled to the first branch (313, 333) and the second branch (315, 335),
in particular wherein two electrode tab bundles (11a/b, 12a/b) are coupled to the first branch (313, 333), and one electrode tab bundle (11c, 12c) is coupled to the second branch (315, 335),
wherein optionally the two electrode tab bundles (11a/b, 12a/b) are bent onto the first branch in opposite directions to face each other, in particular wherein the one electrode tab bundle (11c, 12c) is bent onto the second branch (315, 335) in the same direction as an adjacent one of the two electrode tab bundles (11a/b, 12a/b).

9. The secondary battery (10) according to claim 7 or 8, wherein a first width (C1) of the first branch (313, 333) is greater than a second width (C2) of the second branch (315, 335), the widths (C1, C2) of the first and second branches (313/315, 333/335) being measured along the first side of the plurality of the electrode assemblies (500-560) in a direction (X) perpendicular to the extension direction (Y) along which the plurality of branches (313, 315, 319, 333, 335) extend from the connecting portion (311, 331),
in particular wherein the first width (C1) of the first branch (313, 333) and the second width (C2) of the second branch (315, 335) satisfy 1/3 * C1 ≤ C2 ≤ 1/1.5 * C1, where C1 represents the first width, and C2 represents the second width.

10. The secondary battery (10) according to any one of claims 7 to 9, wherein:
a first area of the first branch (313, 333) and a second area of the second branch (315, 335) satisfy 1/3 * S1 ≤ S2 ≤ 1/1.5 * S1, where S1 represents the first area, S2 represents the second area and the first and second areas are cross-sectional areas of the respective branch (313/315, 333/335) along the first side of the plurality of the electrode assemblies (500-560); and/or
a separation distance (CD) between the first branch (313, 333) and the second branch (315, 335) satisfies 1/2 * C2 ≤ CD ≤ C1, where C1 represents the first width of the first branch (313, 333), C2 represents the second width of the second branch (315, 335), and CD represents the separation distance between the first branch (313, 333) and the second branch (315, 335), the first width (C1), the second width (C2) and the separation distance (CD) being measured along the first side of the plurality of the electrode assemblies (500-560) in a direction (X) perpendicular to the extension direction (Y) along which the plurality of branches (313, 315, 319, 333, 335) extend from the connecting portion (311, 331).

11. The secondary battery (10) according to claim 7, wherein the same number of electrode tab bundles (11a-d, 12a-c) are coupled to the first branch (313, 333) and the second branch (315, 335).

12. The secondary battery (10) according to any one of the preceding claims, wherein:
the electrode tab bundles (11a-d, 12a-c) are coupled to upper surfaces of the plurality of branches (313, 315, 319, 333, 335) facing away from the plurality of electrode assemblies (500-560); and/or
the connection terminal (317, 337) is disposed adjacent to a side end of the plurality of electrode assemblies (500-560) in a direction (Y) of a major axis of the electrode assemblies (500-560) along the first side of the plurality of electrode assemblies (500-560); and/or.
the connection terminal (317, 337) has a cylindrical shape.

13. The secondary battery (10) according to any one of the preceding claims, wherein the connecting portion (311, 331) and the plurality of branches (313, 315, 319, 333, 335) lie in the same plane.

14. The secondary battery (10) according to any one of the preceding claims, wherein an extent of the current collector (310, 330) in the extension direction (Y) along which the plurality of branches (313, 315, 319, 333, 335) extend from the connecting portion (311, 331) is 0.25 to 0.375 times an extent (L1) of the plurality of electrode assemblies (500-560) in the extension direction (Y).

15. The secondary battery (10) according to any one of the preceding claims, wherein:
the current collector (310, 330) is arranged in and/or on an insulating holder (CH), the insulating holder (CH) supporting the current collector (310, 330) and being arranged between the current collector (310, 330) and the first side of the plurality of the electrode assemblies (500-560); and/or
for some or all of the electrode tab bundles (11a-f, 12a-c), at least a portion of the respective electrode tab bundle (11a-f, 12a-c) is bent to be parallel or substantially parallel to the first side of the plurality of electrode assemblies (500-560) by an insulating tape (T1-T3), the insulating tape (T1-T3) being disposed between the current collector (310, 330) and the first side of the plurality of electrode assemblies (500-560).
